(19)

Europäisches
Patentamt
European
Patent Office
Office européen
des brevets

(11)  **EP 4 730 803 A1**

(12)  **EUROPEAN PATENT APPLICATION**

(43) Date of publication:
**22.04.2026 Bulletin 2026/17**

(21) Application number: **24306728.7**

(22) Date of filing: **17.10.2024**

(51) International Patent Classification (IPC):
**H04N 19/52** (2014.01)      **H04N 19/105** (2014.01)
**H04N 19/109** (2014.01)      **H04N 19/176** (2014.01)

(52) Cooperative Patent Classification (CPC):
**H04N 19/52; H04N 19/105; H04N 19/109;**
**H04N 19/176**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **InterDigital CE Patent Holdings, SAS**
**75017 Paris (FR)**

(72) Inventors:
• **LE LEANNEC, Fabrice**
  **35830 BETTON (FR)**
• **LE GUYADEC, Pascal**
  **35760 SAINT GREGOIRE (FR)**
• **BORDES, Philippe**
  **35890 LAILLE (FR)**
• **NASER, Karam**
  **35250 MOUAZE (FR)**

(74) Representative: **Interdigital**
**Immeuble ZEN 2**
**845 A, avenue des Champs Blancs**
**35510 Cesson-Sévigné (FR)**

(54)  **ADAPTIVE TEMPLATE FOR MOTION VECTORS**

(57)      A decoding method is presented. A current template area in a set of a plurality of template areas is obtained for a current block coded in inter mode. A current motion vector predictor is obtained, for the current block, based on the current template area. The current block is decoded based on the current motion vector predictor.

```
┌─────────────────────────────────────────────────────────┐
│                                                          │ 3200
│  obtaining, for a current block coded in inter mode, a   │
│  current template area in a set of a plurality of        │
│  template areas                                          │
└─────────────────────────────────────────────────────────┘
                           │
                           ▼
┌─────────────────────────────────────────────────────────┐
│                                                          │ 3202
│  obtaining a current motion vector predictor, for the    │
│  current block, based on the current template area       │
│                                                          │
└─────────────────────────────────────────────────────────┘
                           │
                           ▼
┌─────────────────────────────────────────────────────────┐
│                                                          │ 3204
│  decoding the current block based on the current motion  │
│  vector predictor                                        │
└─────────────────────────────────────────────────────────┘
```

**FIG. 32**

EP 4 730 803 A1

**Description**

**BACKGROUND**

The present application is related to a method and an apparatus for inter prediction in video encoding and decoding.

**BRIEF SUMMARY**

Briefly stated, in one embodiment, a decoding method is presented. A current template area in a set of a plurality of template areas is obtained for a current block coded in inter mode. A current motion vector predictor is obtained, for the current block, based on the current template area. The current block is decoded based on the current motion vector predictor.

In another embodiment, a decoding device comprising one or more processors and at least one memory coupled to said one or more processors is disclosed. The one or more processors are configured to perform obtaining, for a current block coded in inter mode, a current template area in a set of a plurality of template areas; obtaining a current motion vector predictor, for the current block, based on the current template area; and decoding the current block based on the current motion vector predictor.

In another embodiment, an encoding method is presented. A current template area in a set of a plurality of template areas is obtained for a current block coded in inter mode. A current motion vector predictor is obtained, for the current block, based on the current template area. The current block is encoded based on the current motion vector predictor.

In another embodiment, an encoding device comprising one or more processors and at least one memory coupled to said one or more processors is disclosed. The one or more processors are configured to perform obtaining, for a current block coded in inter mode, a current template area in a set of a plurality of template areas; obtaining a current motion vector predictor, for the current block, based on the current template area; and encoding the current block based on the current motion vector predictor.

**BRIEF DESCRIPTION OF THE DRAWINGS**

The following detailed description will be better understood when read in conjunction with the appended drawings, in which there are shown examples of one or more of the multiple embodiments of the present disclosure. It should be understood, however, that the embodiments described herein are not limited to the precise arrangements and instrumentalities shown in the drawings. In the drawings:

FIG. 1 is a block diagram illustrating an example system according to one or more embodiments of the present disclosure;

FIG. 2 is a block diagram illustrating an example video encoder according to one or more embodiments of the present disclosure;

FIG. 3 is a block diagram illustrating an example video decoder according to one or more embodiments of the present disclosure;

FIG. 4 illustrates an example of Coding Tree Unit, Coding Unit, and Prediction Unit structures to represent a compressed picture;

FIG. 5 illustrates an example of Coding Tree Units, Prediction Units, and Transform Units in video coding;

FIG. 6 illustrates an example partitioning of Coding Units into Prediction Units ;

FIG. 7 illustrates an example of a CTU division of a coding tree, e.g., according to a video coding scheme.

FIG. 8 illustrates an example of split modes supported in multi-type tree partitioning;

FIG. 9 illustrates an example of signaling of inter prediction information (e.g., according to a video coding scheme);

FIG. 10 illustrates an example of motion vector prediction (MVP) candidate list construction in an adaptive motion vector prediction (AMVP) mode of a video coding mechanism;

FIG. 11 illustrates an example of neighboring spatial locations A0, A1 (left) B0, B1, B2 (above) and collocated blocks for temporal motion vector prediction (TMVP) (H and C) of a current block;

FIG. 12 illustrates an example of positions of spatial and temporal motion vector predictors used in a merge mode of a video coding scheme;

FIG. 13 illustrates an example of the construction of a list of merge motion vector predictor candidates of the video coding scheme;

FIG. 14 illustrates an example of the construction of a list of merge motion vector predictor candidates (e.g., in the video coding scheme);

FIG. 15 illustrates an example of whole-block and sub-block-based motion representation categories;

FIGs. 16A-16B illustrate an example of non-sub-block merge candidate list construction;

FIG. 17 illustrates an example of allowed motion vector differences (MVDs);

FIG. 18 illustrates an example of control point based affine motion models (e.g., supported by a video coding scheme);

FIG. 19 illustrates an example of affine motion field representation on a 4x4 subblock basis;

FIG. 20 illustrates an example of locations of inherited affine motion predictors;

FIG. 21 illustrates an example of control point motion vector inheritance;

FIG. 22 illustrates an example of locations of a candidate's position for constructed affine merge mode;

FIG. 23 illustrates the SbTVMP process;

FIG. 24 illustrates spatial locations of added merge candidates;

FIG. 25 illustrates template matching performed on a search area around an initial motion vector;

FIG. 26 illustrates diamond shape search regions ;

FIG. 27 illustrates template and reference samples of the template in reference pictures;

FIG. 28 illustrates template and reference samples of the template for block with sub-block motion using the motion information of the subblocks of the current block;

FIG. 29 illustrates additional directions along $k\times\pi/8$ diagonal angles ;

FIG. 30 illustrates bilateral matching principle ;

FIG. 31 illustrates the principle of AMVP-merge enabling for bi-predicted block with both reference pictures in the past or in the future;

FIG. 32 is a block diagram illustrating a decoding method according to one or more embodiments;

FIG. 33 is a block diagram illustrating an encoding method according to one or more embodiments;

FIG. 34 is a block diagram illustrating a motion vector predictor (MVP) derivation method for the case of an inter block (e.g., coded in whole-block-based AMVP mode) according to one or more embodiments;

FIG. 35 illustrates various template areas according to one or more embodiments; and

FIGs 36 and 37 are block diagrams illustrating motion vector predictor derivation method for an inter CU in merge mode (e.g., in whole-block based merge mode) according to one or more embodiments.

## DETAILED DESCRIPTION

In describing the various embodiments of the present disclosure, certain terminology is used herein for convenience only and should not be considered as limiting such embodiments. In the drawings, the same reference numerals are employed for designating the same elements throughout the several figures and the present description.

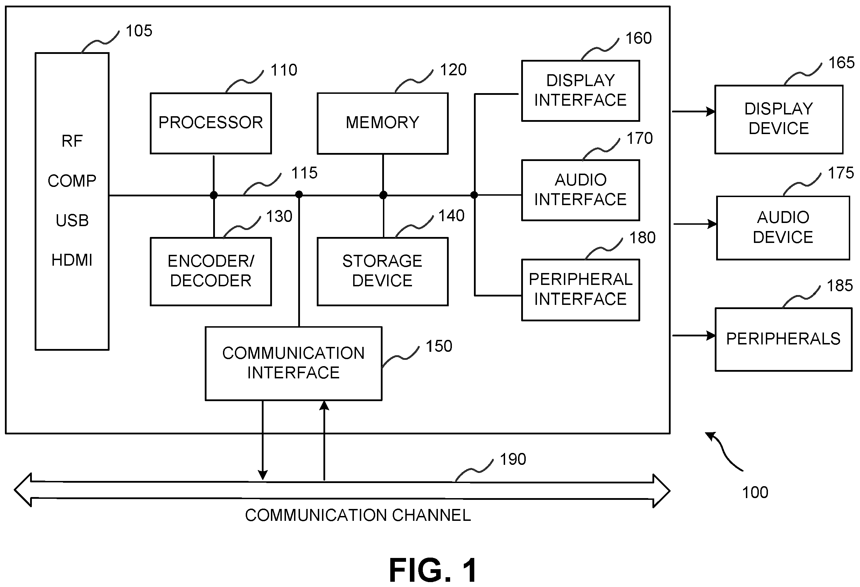

Referring to the drawings, there is shown in **FIG. 1** a block diagram illustrating an example system 100 in which embodiments of the present disclosure can be implemented. The system 100 may be an electronic device including, for example, a personal computer, laptop computer, mobile phone, tablet computer, multimedia set-top box, digital television receiver, personal video recording system, connected home appliance, vehicle control and/or entertainment system, and server. One or more elements of the system 100, singly or in combination, may be implemented as an integrated circuit (IC), multiple ICs, and/or discrete components. For example, in one embodiment, the processing, encoding and/or decoding elements of system 100 are distributed across multiple ICs and/or discrete components. In some embodiments, the system 100 is communicatively coupled to and/or in communication with other systems or devices, via, for example, a communications bus or dedicated input/output ports.

One or more of the elements of system 100 may be provided within an integrated housing, with such elements being interconnected and able to transmit data therebetween using any suitable connection arrangement 115 generally known in the art, including, for example, an internal bus (e.g., I2C bus), wiring, and printed circuit boards.

The system 100 includes at least one processor 110 configured to execute instructions for implementing the embodiments described herein, including signal/data coding and processing. The processor 110 may be a general-purpose processor or microprocessor, digital signal processor (DSP), one or more microprocessors in association with a DSP core, a controller, a microcontroller, application specific integrated circuits (ASICs), field programmable gate arrays (FPGAs), a state machine, and the like. The processor 110 may include at least one central processing unit (CPU), embedded memory, input and output interfaces, and other circuitries.

The system 100 includes at least one memory 120, for example, a volatile memory device and/or a non-volatile memory device. The system 100 includes a storage device 140, that may be or include non-volatile memory and/or dynamic volatile memory, including EEPROM, ROM, PROM, RAM, DRAM, SRAM, DDR, flash, magnetic disk drives, solid state drives (SSD) and/or optical disk drives. The storage device 140 may be or include, for example, an internal storage device, an attached storage device, and/or a network accessible storage device. Although shown separately, the memory 120 and the storage device 140 may be collocated, integrated together, or otherwise combined.

The system 100 includes an encoder/decoder module 130 configured to process video data and to provide encoded video data or decoded video data. The encoder/decoder module 130 may include one or more processors and/or memory (not shown). Although FIG. 1 depicts the encoder/decoder module 130 as a separate element of system 100, it will be understood that the processor 110 and the encoder/decoder module 130 may be collocated and/or integrated together as a combination of hardware and/or software, e.g., in an electronic package or chip. The encoder/decoder module 130 may be or include one or more modules that may be included in one or more separate devices that perform encoding and/or decoding functions.

Instructions for execution by the processor 110 and/or the encoder/decoder module 130 may be stored in the storage device 140 and subsequently loaded into memory 120 for execution by the processor 110. In some embodiments, one or more of processor 110, memory 120, storage device 140, and encoder/decoder module 130 may store one or more items when performing the processes disclosed herein. Such items may include input video, decoded video or portions thereof, bitstreams, matrices, variables, operational logic, and intermediate and/or final results from processing of equations, formulas, or operations.

In some embodiments, the memory of the processor 110 and/or the encoder/decoder module 130 is used to store instructions and/or provide working memory for video encoding and decoding functions. In some embodiments, memory external to the processor 110 and/or the encoder/decoder module 130 (e.g., the memory 120 and/or the storage device 140) is used for one or more of these functions and/or, for example, to store the operating system of a television.

The system 100 may obtain or receive information via one or more input devices, interfaces, and/or ports as indicated in input block 105. Examples of the input devices include a radio frequency (RF) device for transmitting and/or receiving RF signals over various media, for example, RF signals received over the air from a broadcaster; component video (COMP) inputs; a Universal Serial Bus (USB) input; and/or a High-Definition Multimedia Interface (HDMI) input. Other examples include composite video input (not shown). In some embodiments, the input devices are associated with respective input processing elements, e.g., those generally known in the art. For example, the RF device may be associated with elements suitable for selecting a desired frequency (e.g., selecting or band-limiting a signal) or performing error correction on the signal. The USB and/or HDMI inputs may include respective interface processors and transceivers (or transmitters and receivers) for coupling the system 100 to other devices via USB and/or HDMI ports or connections. Various forms of input processing may be implemented, for example, by and/or within a separate input processing device or the processor 110.

The system 100 includes a communication interface 150 that enables wired and/or wireless communication with other devices, e.g., via a communication channel 190. The communication interface 150 may include one or more transceivers, modems, network cards and the like. The communication channel 190 may be or include wired and/or wireless mediums.

In some embodiments, data may be streamed to the system 100 via wired and/or wireless networks. Examples of such wireless networks include cellular, Bluetooth or Wi-Fi (e.g., IEEE 802.11) networks. The wired and/or wireless networks may include one or more base stations (e.g., cellular base stations, access points, etc.), and/or user equipment (e.g. cellular user equipment, stations, etc.), and/or other network elements that communicate with the system 100 via the communication interface 150 and communication channel 190, whereby the system 100 may obtain data streamed from streaming applications (e.g., OTT services) via various networks, including the Internet. In some embodiments, data is streamed to the system 100 via the input block 105 (e.g., using a set-top box that delivers data via the HDMI connection or the RF connection). In some embodiments, data is received by the system 100 in a non-streaming manner.

The system 100 may provide one or more output signals to one or more output devices. The output devices may include a display device 165 (e.g., touchscreen display, monitor, etc.), an audio device 175 (e.g., speakers), and other peripheral devices 185, including, for example, a stand-alone DVR, a disk player, a stereo system, a lighting system, and other devices that provide a function based on the output of the system 100. The display device 165 can be for a television, tablet, laptop, mobile phone, head-mounted display, or other device. In some embodiments, control signals are communicated between the system 100 and the display device 165, the audio device 175, and/or the peripheral devices 185, enabling device-to-device control with or without user intervention. The output devices may couple to and/or communicate with the system 100 via dedicated connections via respective display, audio, and peripheral interfaces 160, 170, 180. Alternatively, the output devices may couple to and/or communicate with the system 100 via the communication channel 190 and the communication interface 150.

The display device 165 and the audio device 175 may be collocated, integrated, or otherwise combined with the other components of system 100 in a single unit (e.g., a television). Alternatively, the display device 165 and the audio device 175 may be separate from one or more of the other components of the system 100. In embodiments in which the display device 165 and the audio device 175 are external components, the output signals may be provided via dedicated outputs and/or connections, including, for example, HDMI ports, USB ports, or COMP outputs.

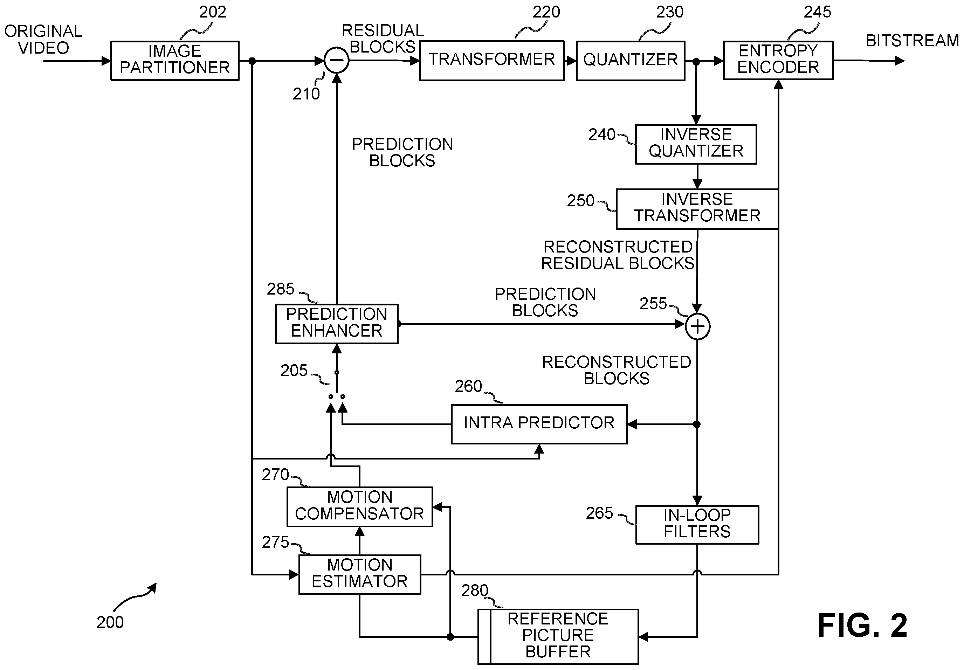

**FIG. 2** is a block diagram illustrating an example video encoder 200 that may be employed by the system 100 (e.g., via the encoder/decoder module 130) described with respect to FIG. 1. The video encoder 200 may be an encoder that employs video compression technologies, standards, specification, or protocols, including Advanced Video Coding (AVC, H.264/MPEG-4), High Efficiency Video Coding (HEVC, H.265), Versatile Video Coding (VVC, H.266), Essential Video Coding (EVC, MPEG-5), AOMedia Video 1 (AV1), VP9, or the Enhanced Compression Model (ECM), and variations or improvements thereof. Those skilled in the art will understand that the various embodiments described herein are not limited to a specific standard and can be applied to other standards and recommendations, as well as extensions thereof.

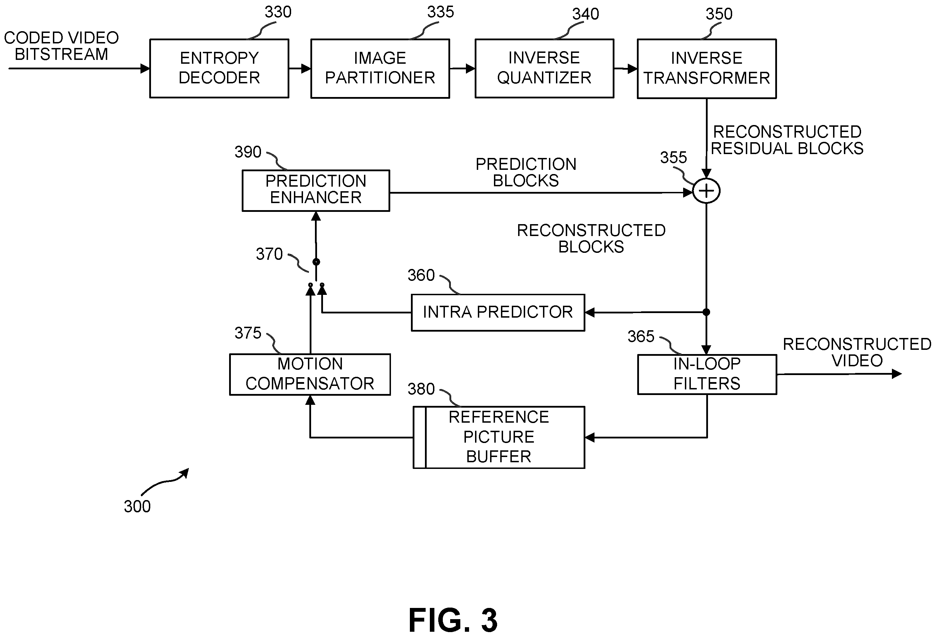

Some embodiments disclosed herein are described with reference to a coding unit (CU) or block of a video frame (or a video image or picture) to which coding tools may be applied by the video encoder 200 and/or by the video decoder 300 (described below with reference to FIG. 3). Generally, embodiments described herein may be applied to a video region formed by a video partition of any shape or size. The video region may be a video slice, a coding tree unit (CTU), or a CU (to which inter prediction or intra prediction can be applied), or a partition thereof, each of which can include samples of a luma component, Y, and chroma components, U and V (also denoted herein by C).

Referring generally to FIG. 2 and the video encoder 200, video data (e.g., one or more video frames) is encoded generally as described below. Prior to encoding, video data may be preprocessed by a precoding processor (not shown). The pre-processing may include, for example, applying a color model transform to the input color components of the input video data (e.g., conversion from RGB 4:4:4 to YUV 4:2:0) or mapping the color components of the input video data to obtain a signal distribution that is more resilient to compression (for instance, applying a histogram equalizer and/or a denoising filter to one or more of the video data's color components). The pre-processing may include associating metadata (for example, a supplemental enhancement information (SEI) message) with the video data that can be attached to a coded video bitstream. After pre-processing, if any, an image (frame) to be encoded is partitioned into CUs (blocks) by an image partitioner 202.

In general, a CU includes a luma block and associated chroma blocks. As such, functions of the video encoder 200 described herein as applied to a CU refer generally to the luma block and the respective chroma blocks. The CUs may be encoded using an intra prediction mode performed by an intra predictor 260. In intra prediction mode, the content of a CU in a frame is predicted based on content from one or more other CUs of the same frame (or region), using reconstructed blocks of other CUs output from an adder 255. The CUs may also or alternatively be encoded using an inter prediction mode, in which motion estimation and motion compensation are performed by a motion estimator 275 and a motion compensator 270, respectively. In inter prediction mode, the content of a CU in a frame is predicted based on content from one or more reconstructed areas of reference frames, available from a reference picture buffer 280.

The video encoder 200 selects or otherwise determines at 205 which prediction mode (intra prediction mode and/or inter prediction mode) to use for encoding a CU. The selected prediction mode may be enhanced (e.g., filtered) by a prediction enhancer 285. Based on the selected mode, a prediction for the CU is generated. A residual block is determined based on the prediction (i.e., prediction block, predicted CU) and the input CU. In some embodiments, such determination is made by a subtractor 210.

The residual block or a partition thereof (e.g., a transform block) is transformed into transform coefficients by a transformer 220. The transform coefficients are quantized by a quantizer 230. An entropy encoder 245 performs entropy encoding of the quantized transform coefficients and coding parameters (e.g., syntax elements including motion vectors and other control data) to form a bitstream of coded video data.

In addition to coding the original video blocks as described herein, the video encoder 200 reconstructs the coded blocks to provide references for future predictions. Thus, quantized transform coefficients (from the quantizer 230) are de-quantized by an inverse quantizer 240, and inverse transformed by an inverse transformer 250, to reconstruct (decode) the residual blocks. The reconstructed residual blocks and prediction blocks are combined (e.g., by the adder 255) to form reconstructed blocks. Thus, the video encoder 200 performs decoding operations through which the encoded images (frames) are reconstructed.

In-loop filters 265 may be applied to the reconstructed image (formed by the reconstructed blocks). The filtered reconstructed image(s) are stored in the reference picture buffer 280 and used by the motion estimator 275 and motion compensator 270, as explained above. The in-loop filters 265 can be applied to the reconstructed samples of an image to reduce distortions introduced by the encoding process. For example, a deblocking filter (DBF), bilateral filter (BIF), sample adaptive offset (SAO), and/or adaptive loop filter (ALF) can be applied to reduce encoding artifacts.

FIG. 3 is a block diagram illustrating an example of video decoder 300 that may be employed by the system 100 (e.g., via the encoder/decoder module 130) described with respect to FIG. 1. Generally, operational features of the video decoder 300 are reciprocal to operational features of the video encoder 200. In the video decoder 300, a coded video bitstream (e.g., generated by the video encoder 200 or another video encoding device or process) is entropy-decoded by an entropy decoder 330 to obtain transform coefficients, motion vectors, and other coding parameters. Based on the coding parameters, an image partitioner 335 divides the picture accordingly. The quantized transform coefficients are de-quantized by an inverse quantizer 340 and inverse transformed by an inverse transformer 350 to decode (reconstruct) respective residual blocks. Depending on the selected prediction mode, a predicted block can be obtained at 370 from an intra predictor 360 (i.e., intra prediction) or from a motion compensator 375 (i.e., inter prediction) and may be enhanced (e.g., filtered) by a prediction enhancer 390, generating a prediction block. The reconstructed residual blocks are combined with prediction blocks (e.g. by an adder 355), resulting in reconstructed blocks.

In-loop filters 365 (e.g., DBF, BIF, SAO, and/or ALF) can be applied to the reconstructed image (formed by the reconstructed blocks), to output reconstructed (decoded) video. The filtered reconstructed image is also stored in a reference picture buffer 380 for reference by the motion compensator 375.

A post-decoding processor (not shown) can process the reconstructed video data. For example, post-decoding processing can include an inverse color model transform (e.g., conversion from YUV 4:2:0 to RGB 4:4:4) or an inverse mapping to reverse the mapping process performed by the pre-encoding processor described with respect to FIG. 2. The post-decoding processor can use metadata derived by the pre-encoding processor and/or signaled in the video bitstream.

Inter prediction information may be represented in compressed video, for example, using different types of video compression schemes. A block-based video codec may associate motion information with a (e.g., each) block coded in inter mode. A block structure may be used in video coding schemes to represent a compressed picture. Motion representations may be assigned to an inter block.

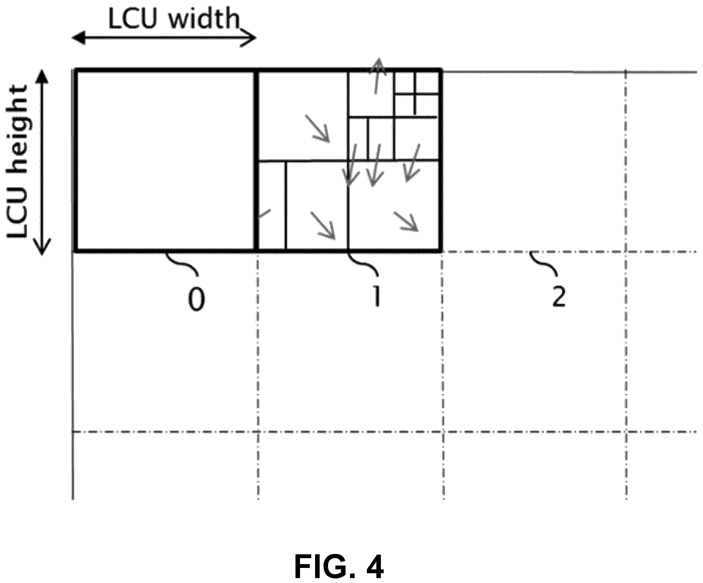

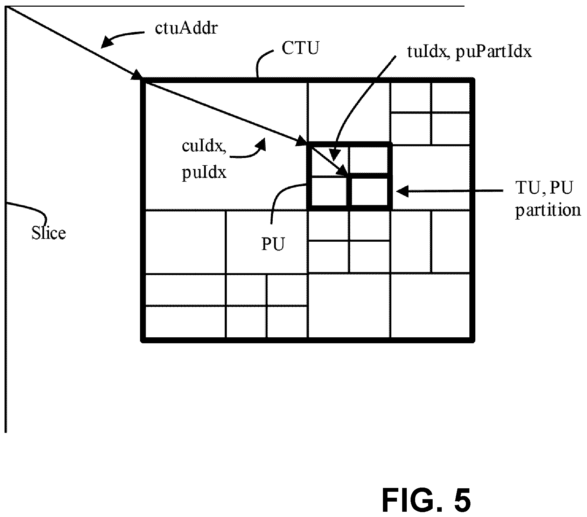

A video compression system may divide a picture into Coding Tree Units (CTUs). A size of a CTU may be, for example, 64x64, 128x128, or 256x256 pixels. A (e.g., each) CTU may be represented by a Coding Tree in the compressed domain. For example, there may be a quad-tree division (QT) of the CTU, where each leaf may be referred to as a Coding Unit (CU), as shown by example in FIG. 4 and FIG. 5.

**FIG. 4** illustrates an example of Coding Tree Unit, Coding Unit, and Prediction Unit structures to represent a compressed picture (e.g., a picture compressed using a video coding scheme).

A (e.g., each) CU may be given Intra or Inter prediction parameters (e.g., Prediction Info). A CU may be spatially partitioned into one or more Prediction Units (PUs). A (e.g., each) PU may be assigned prediction information. An Intra or Inter coding mode may be assigned, for example, on the CU level.

**FIG. 5** illustrates an example of Coding Tree Units, Prediction Units, and Transform Units in video coding.

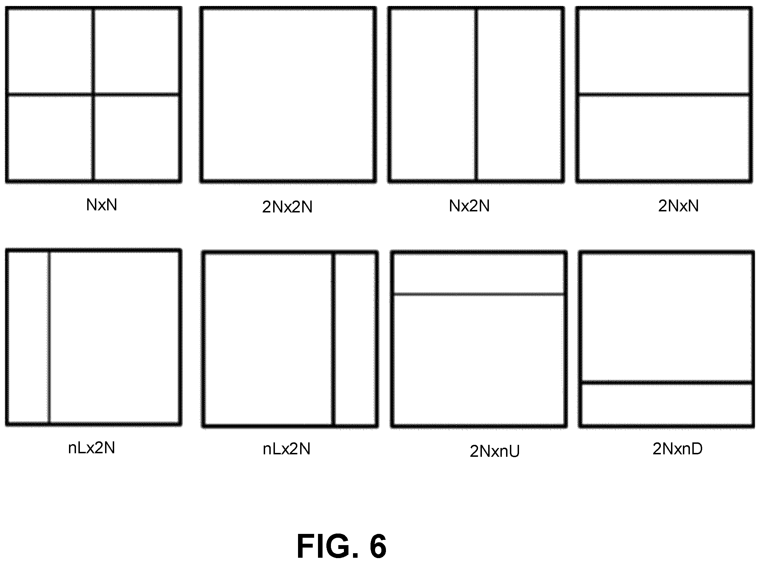

Examples of partition types existing in video coding are illustrated in FIG. 6. **FIG. 6** illustrates an example partitioning of Coding Units into Prediction Units. As shown in FIG. 6, partition types may include square partitions (e.g., 2Nx2N and NxN), which may be (e.g., the only partition types) used in both Intra and Inter CUs, symmetric non-square partitions (e.g., 2NxN, Nx2N, which may be used (e.g., only) in Inter CUs, and/or asymmetric Partitions, which may be used (e.g., only) in Inter CUs.

A block structure may be used in a video coding scheme. A block structure may be used to represent compressed pictures. A picture may be divided in square CTUs (e.g., in various video coding schemes). For example, a CTU may be of size 32x32, 64x64, or 128x128. The CTU division of a picture may (e.g., thus) form a regular grid, where upper and left bounds may spatially coincide with the top and left border of the picture.

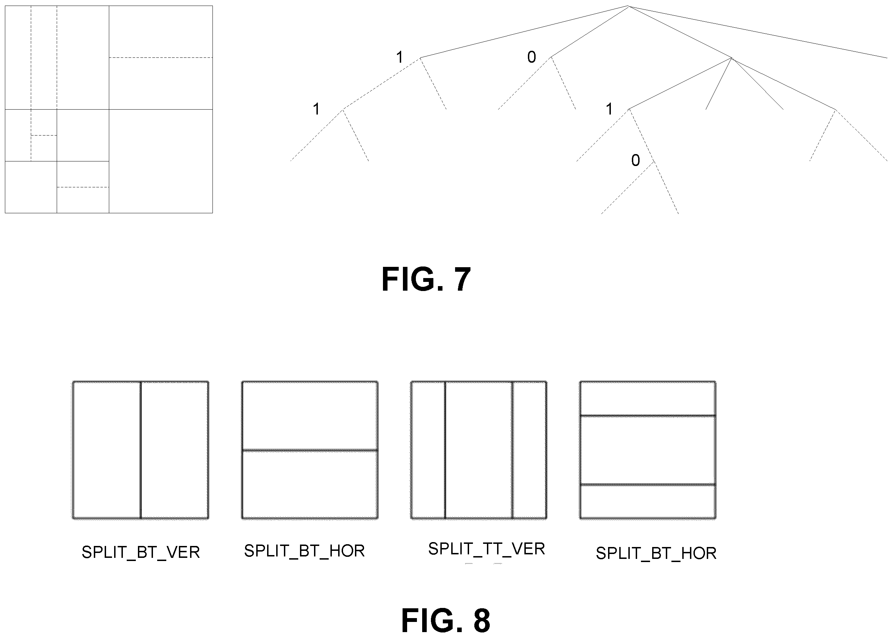

A (e.g., each) CTU may be split into coding units according to a coding tree, as illustrated by example in FIG. 7. **FIG. 7** illustrates an example of a CTU division of a coding tree, e.g., according to a video coding scheme. The coding tree may be made of multiple (e.g., two) stages. A CTU may (e.g., first) be partitioned by a quaternary tree (e.g., or quad-tree/QT). For example, a quad-tree split may divide a coding tree node corresponding to a square picture block into four (4) nodes corresponding to four (4) sub-blocks of equal sizes, as shown by solid lines of FIG. 7.

The quad-tree leaves may (e.g., then) be (e.g., further) partitioned by a multi-type tree (MTT), which may involve four (4) split types (e.g., or split modes), as illustrated by example in FIG. 8. **FIG. 8** illustrates an example of split modes supported in multi-type tree partitioning.

The split types may be vertical and horizontal binary split (BT) modes, e.g., SPLIT_BT_VER and SPLIT_BT_HOR, and vertical and horizontal ternary split (TT) modes SPLIT TT VER and SPLIT TT HOR. A binary split may divide a block into two sub-blocks, which may be half size of the parent block, according to the split orientation. A ternary split may divide a block into three (3) sub-blocks, where sizes may be, respectively, equal to ¼, 1/2, and ¼ of the parent block, in the considered split orientation.

The leaves of the coding tree of a CTU may be the coding unit(s), for example, in the case of a joint coding shared by luma and chroma components.

Separate coding trees may be used in intra picture. Separated coding trees may be used for a luma component on one side and chroma components on the other side. The luma component part of a CTU may be referred to as a luma coding tree block. A luma coding tree block (CTB) may (e.g., then) be associated with a coding tree, where coding tree leaves may be associated with luma coding blocks. Intra picture video coding may use separated luma/chroma coding trees and a three (3) component picture, where the two chroma CTBs may share the same coding tree.

In some types of video coding schemes, unit sizes - CU, PU, and TU - may be of equal size. Coding units may generally not be partitioned into PU or TU, for example, except in one or more (e.g., specific) coding modes.

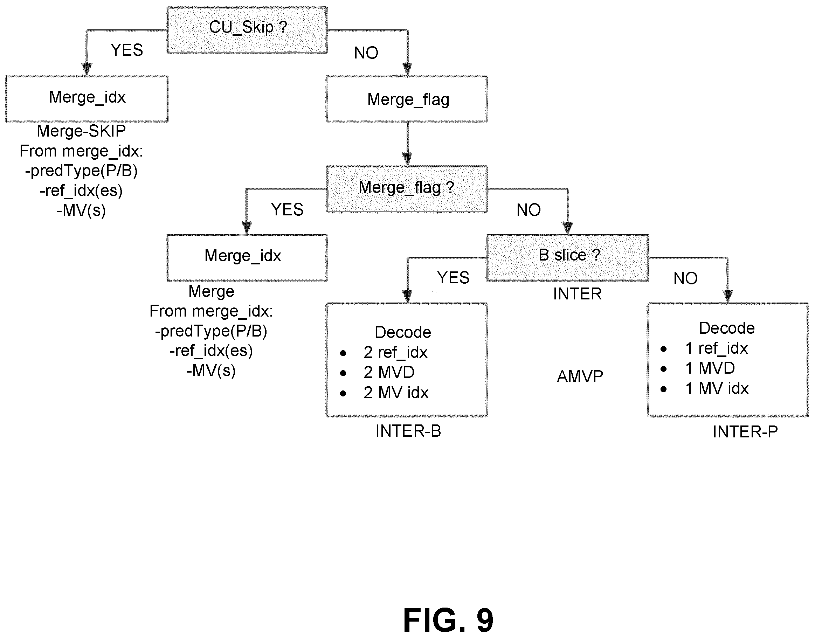

In video coding schemes, inter prediction information may be represented using motion vectors. For example, a coding unit coded in inter mode may employ one or more (e.g., several) motion vectors respectively assigned to a (e.g., each) PU in the CU, e.g., as explained herein. The coding of the motion information may be performed, for example, according to an Adaptive Motion Vector Prediction (AMVP) mode and/or a Merge mode. As example of coding and decoding of inter prediction information is shown in FIG. 9. **FIG. 9** illustrates an example of signaling of inter prediction information (e.g., according to a video coding scheme). As shown in FIG. 9, there may be, for example, three (3) (e.g., main) modes for coding inter predictions parameters: skip merge mode, non-skip merge mode, and AMVP mode. The skip and merge modes may be signaled, for example, through two (2) dedicated flags. AMVP mode may be on, for example,

if/when the two flags are false.

Table 1 provides an example summary of differences between AMVP, merge, and skip modes of inter coded CU.

Table 1 - Example of differences between AMVP, merge and skip modes of inter coded CU

| Mode/explicit MV info | Pred type (P/B) | Ref pic list idx | MVPred idx | MV diff | Merge idx | Residual |
|---|---|---|---|---|---|---|
| AMVP | X | X | X | X | | X (0/1) |
| Merge | | | | | X | X |
| Skip | | | | | X | |

The merge index may enable the derivation of the prediction type (e.g., P or B picture), the reference picture list index, and/or the associated motion vectors.

As shown by FIG. 9 (e.g., in AMVP mode of a video coding scheme), reference pictures (e.g., up to two reference pictures) used to temporally predict a considered PU may be (e.g., explicitly) signaled, for example, with the motion vectors associated with each PU and each reference picture.

The motion vectors may be predictively coded. A motion vector predictor (MVP) may be chosen by the encoder for a (e.g., each) reference picture and a motion vector difference (MVD) relative to a (e.g., each) selected MVP may be signaled. The decoder side reconstructed motion data may include the sum of the MVPs used for a given PU and their associated MVDs.

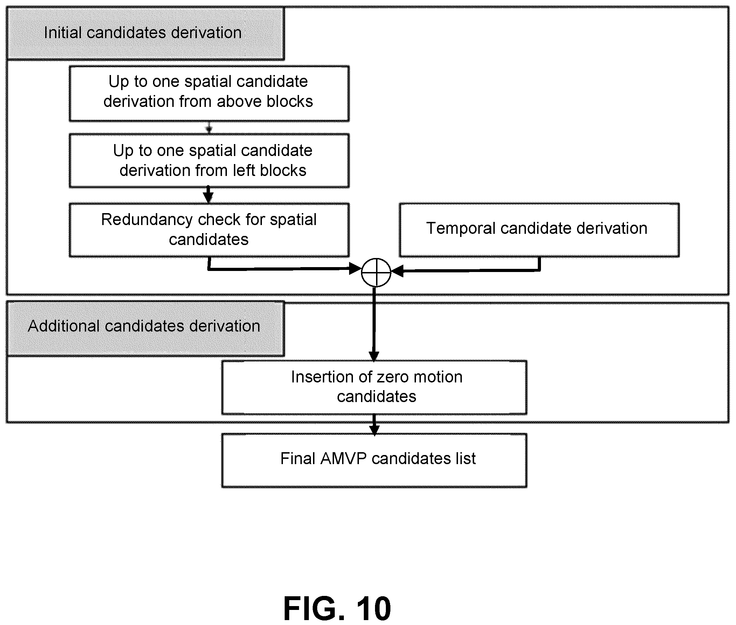

The MVPs may be chosen in an AMVP candidate list, which may include (e.g., 2) elements for a (e.g., each) reference picture. The index of the chosen MVP may be signaled in the bit-stream. The MVP candidate list may be constructed, for example, according to the example workflow shown in FIG. 10. **FIG. 10** illustrates an example of MVP candidate list construction in AMVP mode of a video coding mechanism.

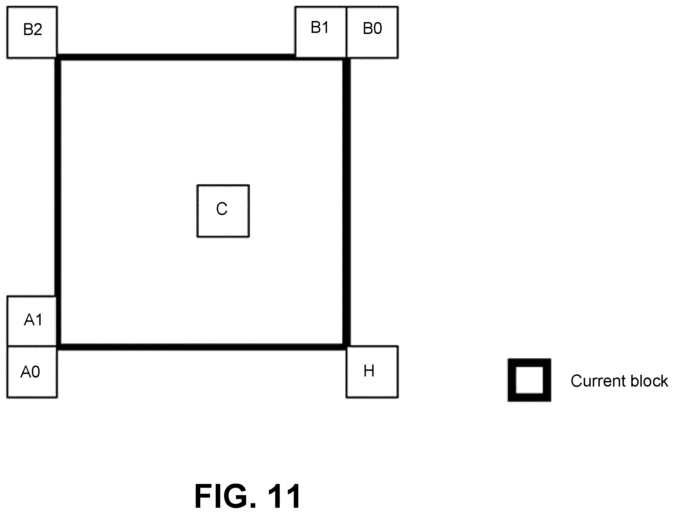

A candidate MVP from left neighboring position A0, A1, as shown by example in FIG. 11, may be derived, for example, if an inter coded block exists at the corresponding spatial location.

**FIG. 11** illustrates an example of neighboring spatial locations A0, A1 (left) B0, B1, B2 (above) and collocated blocks for TMVP (H and C) of a current block. TMPVP is the acronym of Temporal Motion Vector Prediction. An MVP from the top neighboring block may be derived, and (e.g., then) a temporal MVP may be derived, from a reference picture at spatial position H (e.g., if available), or position C (e.g., if otherwise/not available). A derived MVP may be scaled, for example, according to the temporal distances between the reference picture associated with the MVP and the current reference picture being considered.

A redundancy check may be conducted between derived spatial MVPs. For example, duplicate derived MVPs may be discarded.

The final AMVP candidate list may include the (e.g., two first) derived MVP candidates. The AMVP candidate list may be completed with zero motion vectors, for example, if less than two (2) MVP candidates are obtained.

A merge mode may be implemented in video coding schemes. As shown by example in FIG. 10, motion information coding/decoding according to the merge mode may take place in two modes, e.g., the skip mode and the merge mode. The decoder may (e.g., be able to) retrieve the motion information of a PU, for example, based on a (e.g., one single) field (e.g., the merge index) that may be signaled (e.g., in the two modes). The merge index may indicate which Motion Vector Predictor (MVP) in the list of merge motion information predictors may be used to derive the motion information of a current PU. The list of motion information predictors may be referred to as the merge list or the merge candidate list. A candidate motion information predictor may be referred to as a merge candidate.

Merge mode may be implemented in a video coding scheme. The merge mode may include derivation of the inter prediction information (e.g., also called motion information) of a given prediction unit from a selected motion information predictor candidate. The motion information considered may include (e.g., all) the inter prediction parameters of a PU, which may include, for example, one or more of the following: the uni-directional or bi-directional temporal prediction type; the reference picture index within a (e.g., each) reference picture list; and/or the motion vector(s).

A merge candidate list may be (e.g., systematically) constructed with multiple (e.g., 5) merge candidates. Examples describe how the merge list may be constructed, e.g., on the encoder and on the decoder sides. One or more spatial positions (e.g., up to 5 spatial positions) may be considered to retrieve potential candidates. Spatial positions may be visited according to an order, such as, for example, the following order: (1) Left (A1); (2) Above (B1); (3) Above right (B0); (4) Left bottom (A0); and (5) Above left (B2).

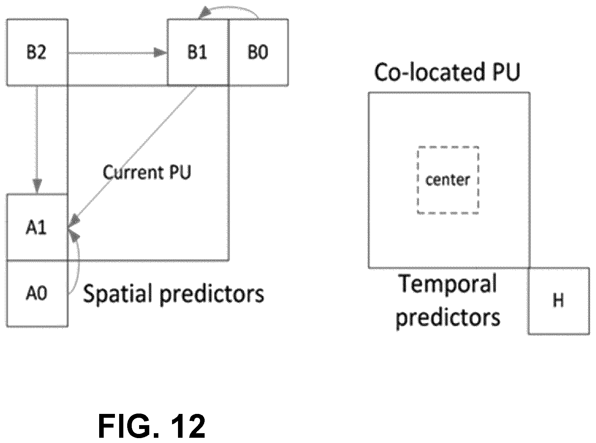

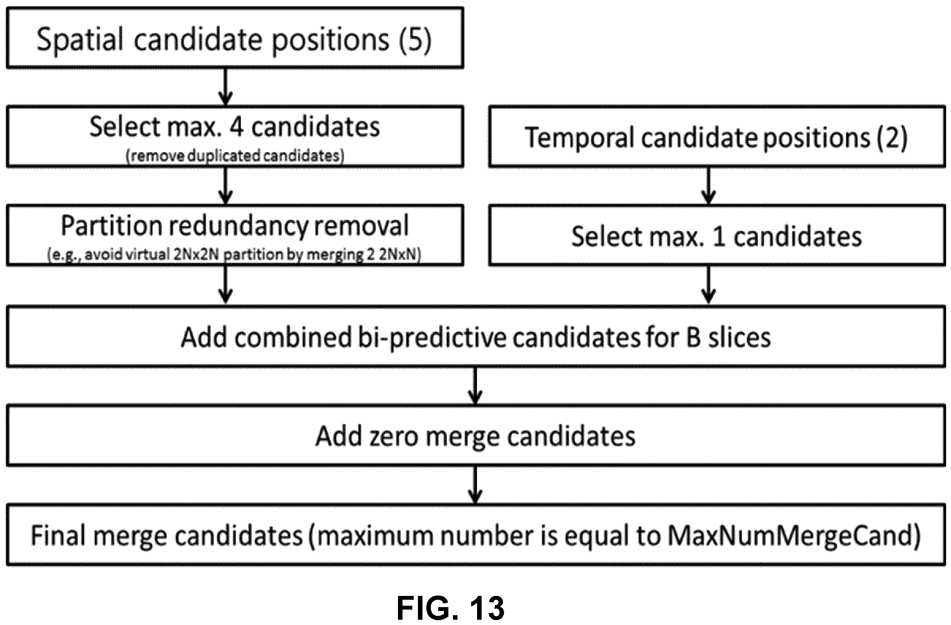

The symbols A0, A1, B0, B1, and B2 may denote the spatial positions shown by example in FIG. 12. **FIG. 12** illustrates an example of positions of spatial and temporal motion vector predictors used in a merge mode of a video coding scheme. As shown in FIG. 12, spatial merge candidates are shown on the left and temporal merge candidates are shown on the right. Spatial candidates, which may include associated motion information, that may be different from each other, may be selected. A temporal predictor (e.g., TMVP) may be selected, for example, by considering the temporal motion information located at position H. The "center" may be a candidate at position H, for example, if the considered reference picture is not available. A pruning process may take place (e.g., as shown by example in FIG. 13), for example, to eliminate redundant candidates from the selected set of spatial and temporal candidates.

**FIG. 13** illustrates an example of the construction of a list of merge motion vector predictor candidates of the video coding scheme. As shown in FIG. 13, candidates of another type (e.g., combined candidate type) may be pushed to the merge list (e.g., if the merge list is not full), for example, in the case of a B slice. A combined candidate type may be formed, for example, by forming a candidate made of the motion information associated with a (e.g., one) reference picture list (L0) from a (e.g., one) candidate already present in the merge list, with the motion associated with the other reference picture list (L1) from another candidate already present in the merge list.

Zero motion vectors may be pushed to the back of the merge list until it is full, for example, if the merge list is still not full (e.g., with five (5) elements).

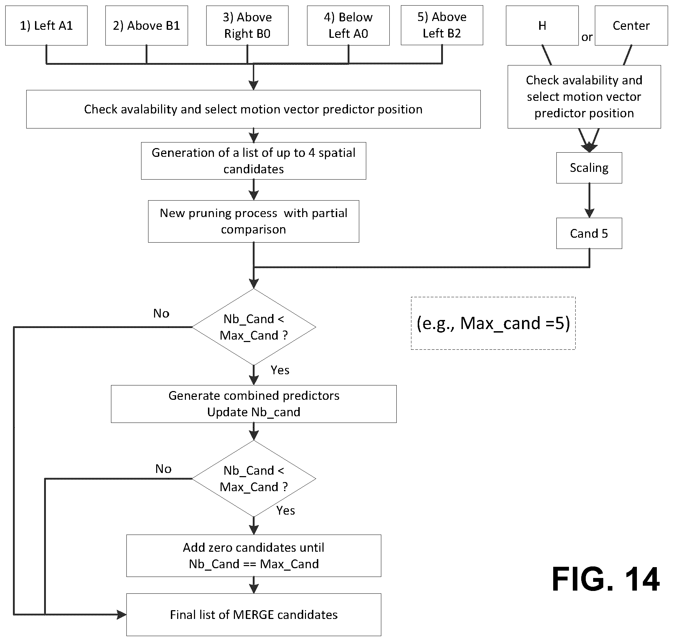

An example of a process (e.g., an overall process) of merge list construction (e.g., in a video coding scheme) is shown in FIG. 14. **FIG. 14** illustrates an example of the construction of a list of merge motion vector predictor candidates (e.g., in the video coding scheme).

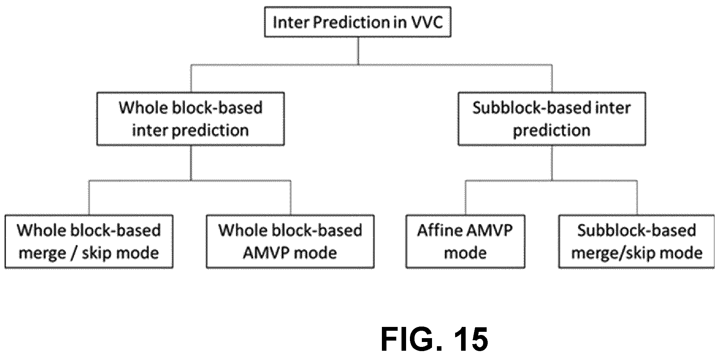

Inter prediction information may be represented and coded in video coding, such as in a video coding scheme. For example, motion data representation may be richer in one video coding scheme than another. Motion data representation may be divided into categories (e.g., two main categories), such as whole-block-based motion representation and sub-block-based motion representation, as illustrated by example in FIG. 15. **FIG. 15** illustrates an example of whole-block and sub-block-based motion representation categories. One or more (e.g., two) modes for coding motion information can be used in a (e.g., each) category. Modes for coding information may include, for example, merge/skip and AMVP.

Whole-block-based motion representation may include assignment of a (e.g., one) set of motion information to an inter block. A set of motion information may be made of one or two motion vectors and associated reference picture(s). Motion information of a block may be represented under the form of a (e.g., single) motion vector for the whole block.

Sub-block-based motion coding mode may divide a block into subblocks (e.g., 4x4 or 8x8 luma sample subblocks). An individual set of motion information may be assigned to a (e.g., each) subblock.

Whole-block-based motion representation and coding may be implemented in video coding schemes.

Whole-block-based AMVP mode may be implemented in certain video coding schemes. An AMVP mode may (e.g., explicitly) signal the Motion Vector as an MV Difference relative to a selected MVP for a given reference picture, for example, together with the reference picture index that identifies the reference picture associated with the coded motion vector.

An AMVP motion vector predictor (MVP) candidate list may include multiple (e.g., two) elements. One or more of the following elements may be employed to construct an AMVP MVP candidate list on the encoder and decoder sides: multiple (e.g., up to four (4)) spatial candidates; (e.g., up to one (1)) temporal MVP candidate; (up to four (4)) History-Based Motion Vector Prediction (HMVP) candidates; and/or Zero motion vector(s), for example, if needed to get two (2)) MVP candidates in the final list.

HMVP may use previously coded MVs as MVPs associated with adjacent or non-adjacent blocks relative to a current block. A table of HMVP candidates may be maintained at the encoder and decoder sides. The HMVP table may be updated on the fly, for example, as a first-in-first-out (FIFO) buffer of MVPs. In some examples, there may be up to five candidates in the HMVP table. The table may be updated by appending associated motion information to the end of the table as a new HMVP candidate, for example, after coding a (e.g., one) inter predicted block that is not in sub-block mode (e.g., including affine mode) or geometric partition mode (GPM). A FIFO rule may be applied to manage the table. A redundant candidate in an HMVP table may be removed, for example, instead of the first candidate. The table may be reset, for example, at a (e.g., each) CTU row, e.g., to enable parallel processing.

A whole-block-based AMVP motion coding mode may employ, for example, one or more of the following (e.g., in addition to an AMVP candidate list): Symmetric Motion Vector Difference (SMVD); Adaptive Motion Vector Resolution (AMVR); and/or Bi-prediction with coding unit weights (BCW).

SMVD may include setting the MVD associated with reference picture list 1 (L1) equal to the opposite of the MVD associated with reference picture list 0 (L0) for a given block. Reference pictures used in SMVD mode may be derived by the decoder, for example, with pre-defined rules. SMVD may enable reduction of the rate cost for coding MVD information. SMVD may be selected at block level.

AMVR may allow/enable signaling the MVD with quarter-pel, half-pel, integer-pel, or 4-pel luma sample resolutions, which may allow/enable saving bits in the coding of MVD information. The motion vector resolution (e.g., in AMVR) may be chosen at block level.

BCW may enable bi-prediction of a block with unequal weights. BCW may be signaled at block (e.g., CU) level.

An internal motion vector representation (e.g., in a video codec) may be achieved at 1/16-luma sample accuracy, for example, instead of ¼-luma sample accuracy (e.g., in a video coding mechanism).

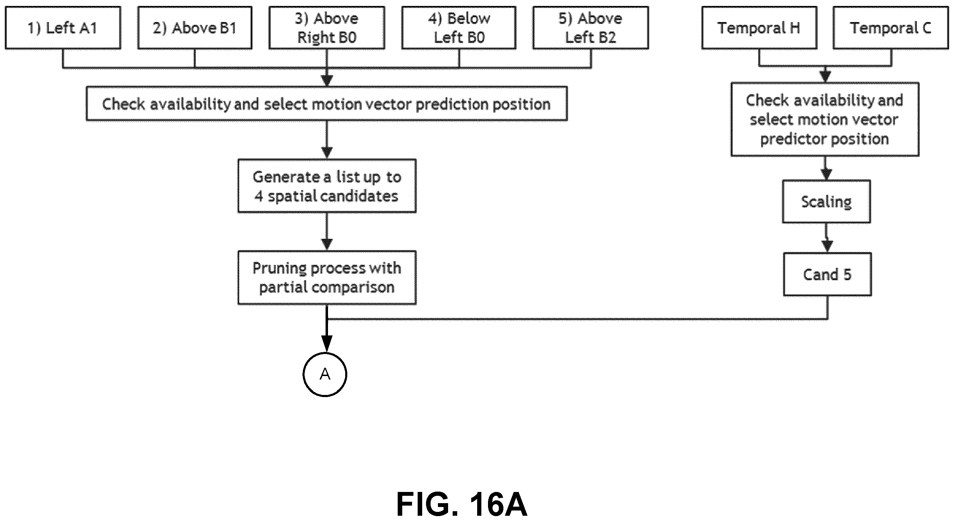

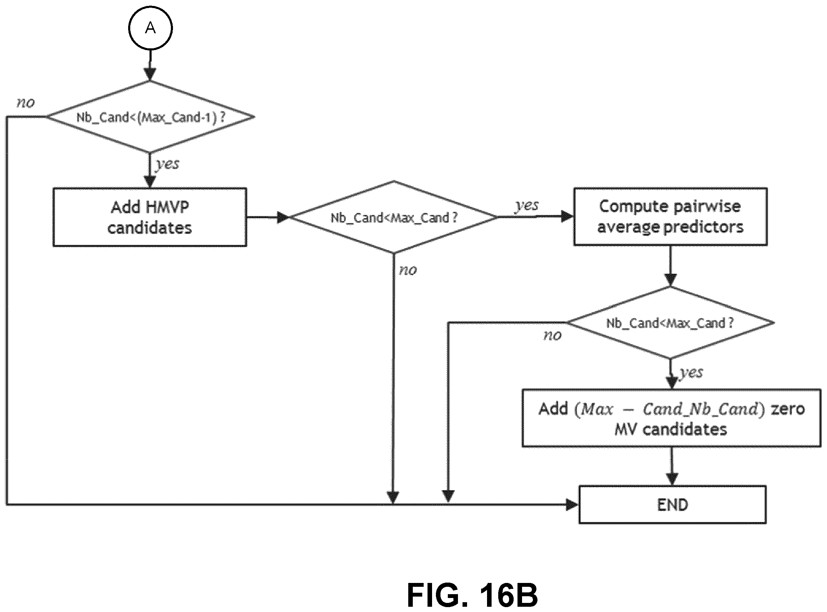

An example of a whole-block-based (e.g., or non-subblock-based) merge candidate list construction process (e.g., for a video coding scheme) is illustrated by **FIG. 16A** and **FIG. 16B.** Whole-block-based merge mode (e.g., in a video coding mechanism) may also be called regular merge mode. Whole-block-based merge mode merge MVP candidate list construction may differ, for example, among various video coding mechanisms. Whole-block-based merge mode may have multiple merge coding modes, which may include, for example, one or more of the following: Merge Mode with MV Difference (MMVD); Geometric Partitioning Mode (GPM); and/or Combined Intra/Inter Prediction (CIIP).

A merge MVP candidate list may be constructed with one or more of the following types of MVP candidates; spatial candidates; temporal MVP candidates; HMVP candidates; pairwise average candidates; and/or zero MV candidates.

Spatial candidates in one video coding scheme may be similar to that of another video coding mechanism, e.g., except the two first candidates may be swapped. Temporal MVP candidates in one video coding scheme may be similar to another video coding scheme. HMVP candidates may be inserted into the merge list, for example, so that the merge list reaches the maximum allowed number of MVP candidates minus one (1). Pairwise Average candidates (e.g., up to one pairwise average candidate) may be added to the merge candidate list. Pairwise candidates may be computed, for example, as follows. The two first MVP candidates present in the list may be considered. The motion vectors of the two first MVP candidates present in the list may be averaged. The averaging may be computed separately for each reference picture list. Motion vectors related to both lists L0 and L1 may be averaged, for example, if both MVPs are bi-directional. If only one motion vector is present in a reference picture list, the motion vector may be taken as is to form the pairwise candidate.

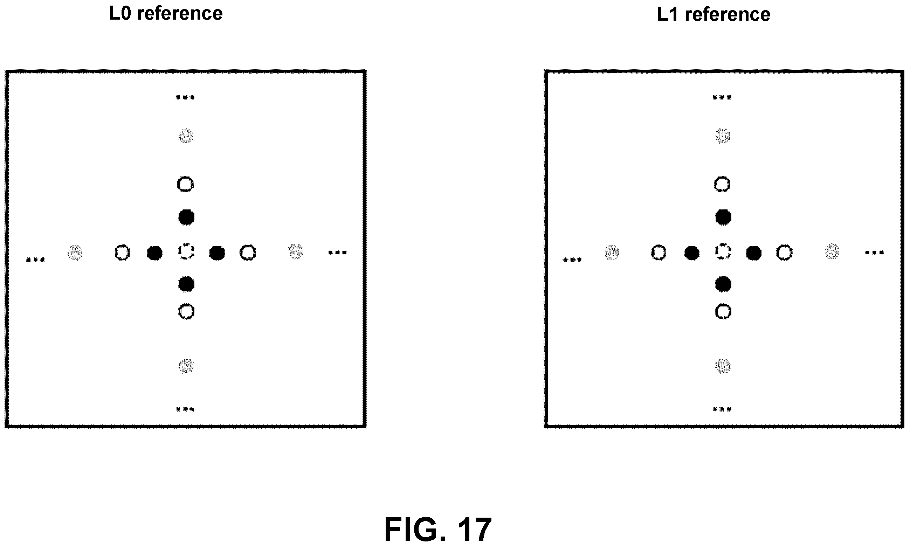

**FIG. 17** illustrates an example of allowed motion vector differences (MVDs). MMVD merge mode may allow/enable coding a limited motion vector difference (MVD) on top of a selected merge MVP candidates, for example, to represent the motion information of a CU. MMVD coding may be limited to four (4) vector directions and eight (8) magnitude values, e.g., from ¼ luma sample to 32-luma sample. MMVD may provide an intermediate accuracy level, which may yield an intermediate trade-off between rate cost and MV accuracy to signal the motion information.

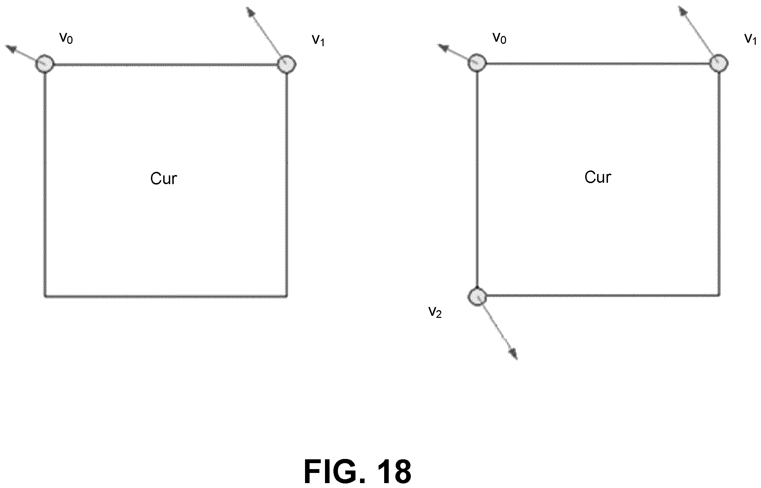

Sub-block-based motion may be represented and coded, for example, in a video coding scheme. **FIG. 18** illustrates an example of control point based affine motion models (e.g., supported by a video coding scheme). On the left a 4-parameter affine mode is shown. On the right a 6-parameter affine model is shown.

Affine motion compensation may be performed. In a video coding scheme, translation motion model (e.g., only a translation motion model) may be applied for motion compensated temporal prediction (MCP). A translational motion may not (e.g., be able to) capture some types of motion, such as zoom in, zoom out, rotation, perspective motions, and/or irregular motions. In a video coding scheme, a sub-block-based affine motion compensation prediction may be used at a CU level. As shown by example in FIG. 18, the affine motion field of the block may be described by motion information of (e.g., two) control point motion vectors (e.g., 4-parameter affine motion model) or (e.g., three) control point motion vectors (e.g., 6-parameter affine motion model). As shown in FIG. 18, the vectors v0, v1, v2, may be the control point motion vectors (CPMVs) associated with the block. The vectors may be used to represent the affine motion field of the considered block.

A 4-parameter affine motion model may derive a motion vector at sample location (x, y) in a block, for example, in accordance with the 4-parameter affine motion field computation shown in the following equation:

$$\begin{cases} mv_x = \dfrac{mv_{1x} - mv_{0x}}{W}x + \dfrac{mv_{0y} - mv_{1y}}{W}y + mv_{0x} \\ mv_y = \dfrac{mv_{1y} - mv_{0y}}{W}x + \dfrac{mv_{1x} - mv_{0x}}{W}y + mv_{0y} \end{cases}$$

A 6-parameter affine motion model may derive a motion vector at sample location (x, y) in a block, for example, in accordance with the 6-parameter affine motion field computation as shown in the following equation:

$$\begin{cases} mv_x = \dfrac{mv_{1x} - mv_{0x}}{W}x + \dfrac{mv_{2x} - mv_{0x}}{H}y + mv_{0x} \\ mv_y = \dfrac{mv_{1y} - mv_{0y}}{W}x + \dfrac{mv_{2y} - mv_{0y}}{H}y + mv_{0y} \end{cases}$$

where (mv0x, mv0y) may be the motion vector of the top-left corner control point, (mv1x, mv1y) may be the motion vector of the top-right corner control point, and (mv2x, mv2y) may be the motion vector of the bottom-left corner control point.

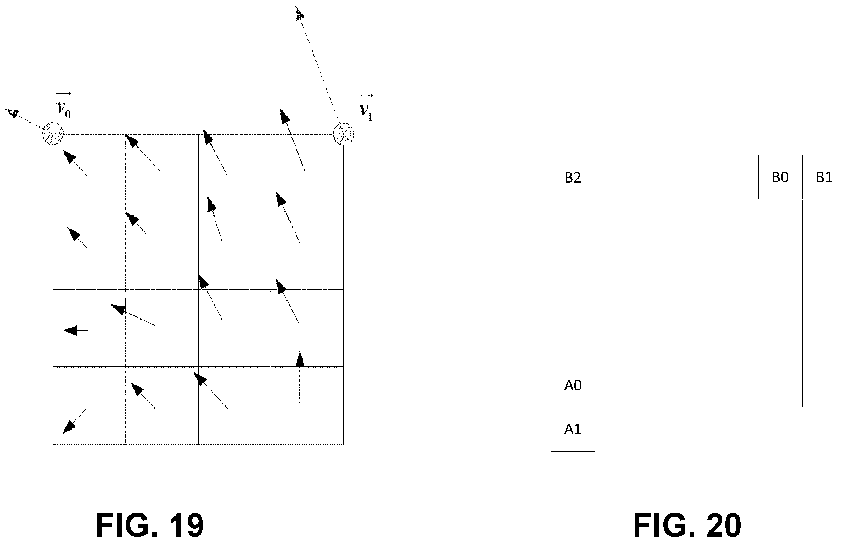

**FIG. 19** illustrates an example of affine motion field representation on a 4x4 subblock basis. Affine motion compensation may be performed, for example, on a 4x4 subblock basis. A motion vector of a (e.g., each) 4×4 luma subblock may be derived, for example, by calculating the motion vector of the center sample of each subblock according to Eq. (2) or Eq. (3) (e.g., as shown by example in FIG. 19). The calculated motion vector may be rounded, for example, to 1/16 fraction accuracy. The motion compensation interpolation filters may (e.g., then) be applied to generate the prediction of a (e.g., each) subblock with the derived motion vector. The subblock size in chroma-components may (e.g., also) be, for example, $4\times4$. The MV of a $4\times4$ chroma subblock may be calculated as the average of the MVs of the top-left and bottom-right luma subblocks in the collocated 8x8 luma region.

Translational motion inter prediction may implement one or more (e.g., two main) affine inter prediction modes, such as affine AMVP mode and/or affine merge mode.

Affine merge mode may be a subblock-based motion coding mode inside the sub-block merge mode. Affine merge mode may be applied for CUs for example, based on width and/or height (e.g., if both width and height larger than or equal to eight (8)). The CPMVs of the current CU may be generated in affine merge mode based on the motion information of the spatial neighboring CUs. There may be one or more (e.g., up to five) Control Point Motion Vector Predictors (CPMVP) candidates. An index may be signaled to indicate the candidate to be used for the current CU. One or more of the following three types of CPVM candidate may be used to form an affine merge candidate list: inherited affine merge candidates extrapolated from the CPMVs of the neighbor CUs; constructed affine merge candidates' CPMVPs that may be derived using the translational MVs of the neighbor CUs; and/or zero MVs.

There may be a maximum number of (e.g., two) inherited affine candidates, which may be derived from the affine motion model of the neighboring blocks, e.g., one from left neighboring CUs and one from above neighboring CUs.

Candidate blocks are shown by example in FIG. 20. **FIG. 20** illustrates an example of locations of inherited affine motion predictors. The scan order may be A0->A1, for example, for the left predictor. The scan order may be B0->B1->B2, for example, for the above predictor. The first inherited candidate from a (e.g., each) side (e.g., only the first inherited candidate from each side) may be selected. Control point motion vectors for a neighboring affine CU may be used to derive the CPMVP candidate in the affine merge list of the current CU, for example, if/when the neighboring affine CU is identified.

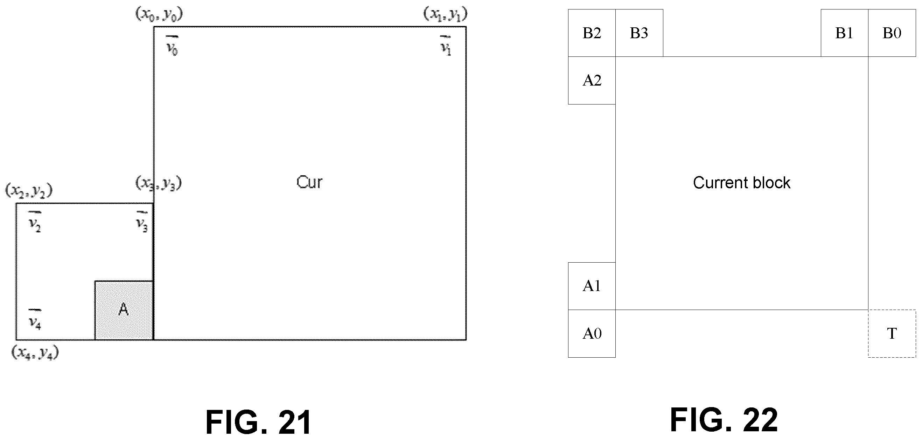

**FIG. 21** illustrates an example of control point motion vector inheritance. As shown in FIG. 21, the motion vectors $v_2$, $v_3$ and $v_4$ of the top left corner, above right corner and left bottom corner of the CU that include the block A may be attained, for example, if the neighbor left bottom block A is coded in affine mode. The two CPMVs of the current CU may be calculated according to $v_2$, and $v_3$, for example, if/when block A is coded with a 4-parameter affine model. The three CPMVs of the current CU may be calculated according to $v_2$, $v_3$, and $v_4$, for example, if block A is coded with a 6-parameter affine model.

**FIG. 22** illustrates an example of locations of a candidate's position for constructed affine merge mode. A constructed affine candidate may be a candidate constructed by combining the neighbor translational motion information of each control point. The motion information for the control points may be derived from (e.g., specified) spatial neighbors and a temporal neighbor, e.g., as shown by example in FIG. 22. CPMVk (k=1, 2, 3, 4) may represent the k-th control point. For CPMV1, the B2->B3->A2 blocks may be checked. The MV of the first available block may be used. For CPMV2, the B1->B0 blocks may be checked. For CPMV3, the A1->A0 blocks may be checked. TMVP may be used as CPMV4, for example, if it is available.

Affine merge candidates may be constructed based on the motion information, for example, after MVs of four control points are obtained. One or more of the following combinations of control point MVs may be used to generate a constructed affine merge candidate (e.g., in the following order): {CPMV1, CPMV2, CPMV3}, {CPMV1, CPMV2, CPMV4}, {CPMV1, CPMV3, CPMV4}, {CPMV2, CPMV3, CPMV4}, {CPMV1, CPMV2}, {CPMV1, CPMV3}.

For example, control point motion vectors {CPMV1, CPMV2, CPMV3} may be used. Control point motion vectors {CPMV1, CPMV2, CPMV3} may be used to generate an affine motion field for the CU (e.g., following Eq. (3)).

The combination of three (3) CPMVs may construct a 6-parameter affine merge candidate. The combination of two (2) CPMVs may construct a 4-parameter affine merge candidate. The related combination of control point MVs may be discarded, for example, if the reference indices of control points are different, which may avoid a motion scaling process in case CPMVs point to different reference pictures.

Zero MVs may be inserted to the end of the list, for example, if the list is still not full, for example, after inherited affine merge candidates and constructed affine merge candidate are considered for being appended to the affine merge candidate list.

Affine AMVP mode may be applied for CUs based on width and/or height (e.g., with both width and height larger than or equal to 16). An affine flag (e.g., at CU level) may be signaled in the bitstream to indicate the use of affine AMVP mode. Another flag may signal if a 4-parameter affine or a 6-parameter affine model is used. The difference of the CPMVs of a current CU and their predictors CPMVPs may be coded, e.g., in affine AMVP mode.

The CPMVPs used to predict the CPMV of a CU may be taken from an affine AMVP candidate list, which may be made of two (2) elements. The affine AMVP candidate list may be constructed, for example, using one or more of the following types of CPVM candidate (e.g., in the following order): inherited affine AMVP candidates extrapolated from the CPMVs of the neighbor CUs; constructed affine AMVP candidates CPMVPs that may be derived using the translational MVs of the neighbor CUs; translational MVs from neighboring CUs; and/or zero MVs.

Term checking may be used. Checking a potential candidate may include checking that a valid Affine AMVP or Affine merge candidate to predict the current CU's affine CPMVs is available and/or is valid. An available and valid candidate may be added to the candidate list under construction.

The checking order of inherited affine AMVP candidates may be the same as or similar to the checking order of inherited affine merge candidates. A difference (e.g., the only difference) may be that (e.g., only) the affine CU that has the same reference picture as in the current block may be considered for an AVMP candidate. A pruning process may not be applied, for example, if/when inserting an inherited affine motion predictor into the candidate list.

A constructed affine AMVP candidate may be derived from (e.g., specified) spatial neighbors, e.g., as shown by example in FIG. 22. The checking order used may, for example, be the same as a checking order in affine merge candidate construction. The reference picture index of the neighboring block may (e.g., also) be checked. The block that may be used may be the first block in the checking order that is inter coded and has the same reference picture as current CUs.

MVs $mv_0$ and $mv_1$ may be added as one candidate in the affine AMVP list, for example, if/when the current CU is coded with 4-parameter affine mode, and $mv_0$ and $mv_1$ are both available. Three CPMVs may be added as one candidate in the affine AMVP list, for example, if/when the current CU is coded with 6-parameter affine mode, and the three CPMVs are available. A constructed AMVP candidate may be set as unavailable, for example, if otherwise.

MVs $mv_0$, $mv_1$ and $mv_2$ may be added, e.g., in order, as translational MVs to predict (e.g., all) control point MVs of the current CU, e.g., if/when available, for example, if the affine AMVP list of candidates is still less than two (2) after valid inherited affine AMVP candidates and constructed AMVP candidate are inserted. Z zero MVs may (e.g., then) be used to fill the affine AMVP list if it is still not full.

A sub-block merge/skip mode may be a merge mode using a merge candidate list of (e.g., at most five (5)) elements with (e.g., only) subblock-based motion candidates. A merge index (e.g., for regular merge) may indicate a subblock-based merge candidate used to derive the motion data of a CU. The subblock-based merge candidate list may be made of, for example, the following elements. A Subblock-based Temporal Motion Vector Prediction (SbTMVP) candidate may be put at first place. Affine merge candidates may (e.g., then) be put in the list. The subblock merge list may be constructed, for example, with one or more of the following list of candidates: SbTMVP; inherited affine merge candidates; constructed affine merge candidates CPMVPs that may be derived using the translational MVs of the neighbor CUs; and/or zero MVs.

Subblock-based Temporal Motion Vector Prediction (SbTMVP) may use the motion field in the collocated picture, which may be similar to the TMVP regular merge candidate, e.g., to improve motion vector prediction and merge mode for CUs in the current picture. The same collocated picture used by TMVP may be used for SbTVMP. SbTMVP may differ from TMVP in one or more of the following aspects. TMVP may predict motion at a CU level. SbTMVP may predict motion at a sub-CU level. TMVP may fetch temporal motion vectors from the collocated block in the collocated picture. The collocated block may be the bottom-right or center block relative to the current CU. SbTMVP may apply a motion shift before fetching the temporal motion information from the collocated picture. The motion shift may be obtained from the motion vector from a spatial neighboring block of the current CU.

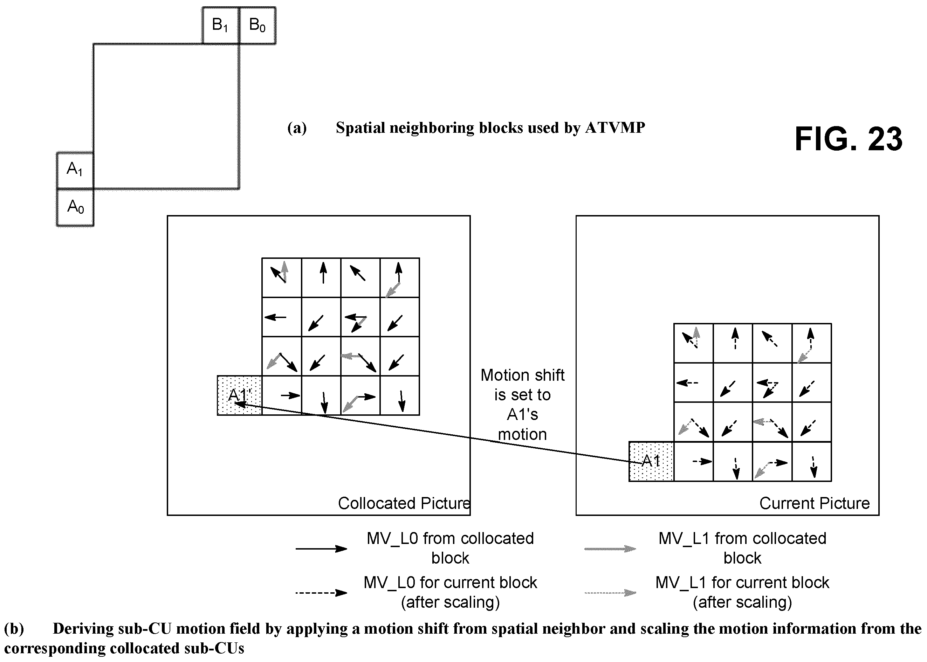

**FIG. 23** illustrates the SbTVMP process. SbTMVP may predict the motion vectors of the sub-CUs within the current CU, e.g., in two steps. In the first step, the spatial neighbor A1 in FIG. 23 (a) may be examined. If A1 has a motion vector that uses the collocated picture as its reference picture, this motion vector may be selected to be the motion shift to be applied. If no such motion is identified, then the motion shift may be set to (0, 0).

In the second step, the motion shift identified in the first step may be applied (i.e. added to the current block's coordinates), e.g., to obtain sub-CU level motion information (motion vectors and reference indices) from the collocated picture as shown in FIG. 23 (b). The example in FIG. 23 (b) considers that the motion shift is set to block A1's motion. Then, for a (e.g., each) sub-CU, the motion information of its corresponding block (e.g., the smallest motion grid that covers the center sample) in the collocated picture may be used to derive the motion information for the sub-CU. After the motion information of the collocated sub-CU is identified, it may be converted to the motion vectors and reference indices of the current sub-CU, e.g., in a similar way as the TMVP process of HEVC, where temporal motion scaling may be applied to align the reference pictures of the temporal motion vectors to those of the current CU.

A combined subblock based merge list which contains both SbTVMP candidate and affine merge candidates may be used for the signalling of subblock based merge mode. The SbTVMP mode may be enabled/disabled by a sequence parameter set (SPS) flag. If the SbTMVP mode is enabled, the SbTMVP predictor may be added as the first entry of the list of subblock based merge candidates, followed by the affine merge candidates. The size of subblock based merge list may be signalled in SPS. The maximum allowed size of the subblock based merge list may be equal to five.

The sub-CU size used in SbTMVP may be fixed to be 8x8. As done for affine merge mode, in an example, SbTMVP mode is only applicable to the CU with both width and height larger than or equal to 8. The encoding logic of the additional SbTMVP merge candidate may be the same as for the other merge candidates, that is, for a (e.g., each) CU in P or B slice, an additional RD check may be performed to decide whether to use the SbTMVP candidate.

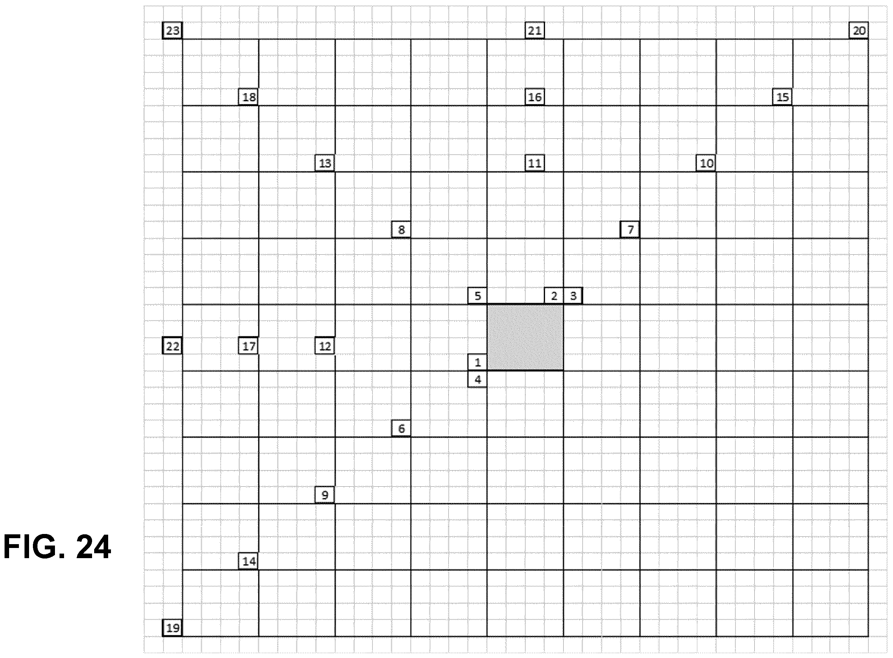

Some new modes (e.g., non-adjacent spatial merge candidates) for motion representation may be used. Non-adjacent spatial MV predictor (NASMVP) candidates may be added to the regular merge list, behind the TMVP merge candidate. **FIG. 24** illustrates spatial locations of these added merge candidates.

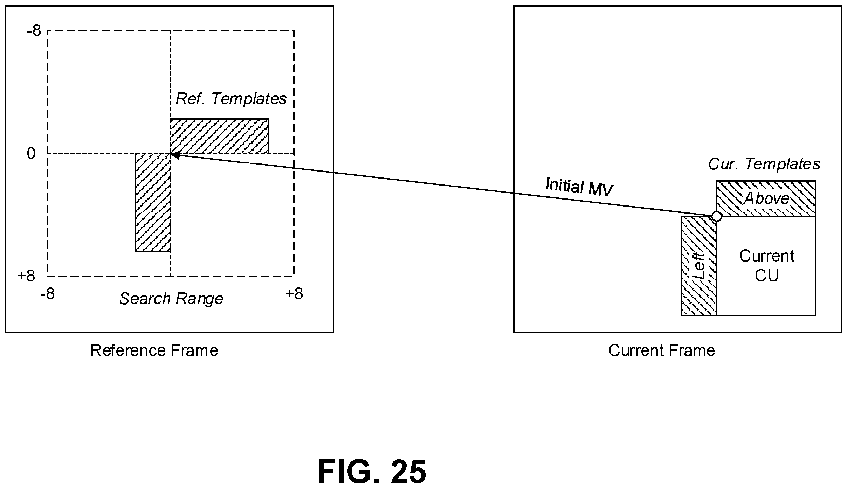

Template matching may be a decoder side motion vector refinement method. It refines a CU's motion vector by matching a template region (e.g., a region above and on the left of current CU) with a template in a search area in the reference picture. As illustrated by **FIG. 25,** a better MV may be searched around an initial MV of the current CU within a [- 8, +8]-pel search range.

The refined MV may be obtained by minimizing a so-called template matching cost (a.k.a template matching error) between the template around current CU and candidate templates in reference picture.

The TM technique may be also used to determine some MVP candidates in regular AMVP and regular merge modes. In particular, in AMVP, the MVP candidates may be determined according to the template matching error. The MVP candidate with minimum TM cost may be selected and further refined through TM. TM may refine this MVP candidate, for example, by starting from full-pel MVD precision (or 4-pel for 4-pel AMVP mode) within a [-8, +8]-pel search range by using iterative 16-point diamond search. The AMVP candidate may be further refined by using cross search with full-pel MVD precision (or 4-pel for 4-pel AMVR mode), followed sequentially by half-pel and quarter-pel ones depending on AMVR mode as specified in Table 2. This search process ensures that the MVP candidate still keeps the same MV precision as indicated by the AMVR mode after TM process. In the search process, if the difference between the previous minimum cost and the current minimum cost in the iteration is less than a threshold that may be equal to the area of the block, the search process terminates.

Table 2 - Search patterns of AMVR and merge mode with AMVR

| Search pattern | AMVR mode | | | | Merge mode | |
|---|---|---|---|---|---|---|
| | 4-pel | Full-pel | Half-pel | Quarter-pel | AltIF=0 | AltIF=1 |
| 4-pel diamond | v | | | | | |
| 4-pel cross | v | | | | | |
| Full-pel diamond | | v | v | v | v | v |
| Full-pel cross | | v | v | v | v | v |
| Half-pel cross | | | v | v | v | v |
| Quarter-pel cross | | | | v | v | |
| 1/8-pel cross | | | | | v | |

In merge mode, similar search method may be applied to the merge candidate indicated by the merge index. As Table 2 shows, TM may perform all the way down to 1/8-pel MVD precision or skipping those beyond half-pel MVD precision, e.g., depending on whether the alternative interpolation filter (that may be used, e.g., when AMVR is of half-pel mode) is used according to merged motion information. Besides, when TM mode is enabled, template matching may work as an independent process or an extra MV refinement process between block-based and subblock-based bilateral matching (BM) methods, e.g., depending on whether BM is enabled or not according to its enabling condition check.

When TM is applied to bi-predictive blocks, an iterative process may be used. Specifically, the initial motion vectors of L0 and L1 may be firstly refined and TM costs $Cost_0$ and $Cost_1$ may be calculated for L0 and L1, respectively. When $Cost_0$ is larger than Costi, the refined motion vector of L1 ($MV'1$) may be used to derive a further refined motion vector of L0 ($MV'0$). Then, the $MV'1$ may be further refined using $MV'0$. Similarly, when $Cost_0$ is not larger than $Cost_1$, the refined motion vector of L0 ($MV'0$) may be used to derive a further refined motion vector of L1 ($MV'1$), and the $MV'0$ may be further refined using $MV'1$. Besides, TM for bi-prediction may be enabled when DMVR condition is satisfied.

The template matching may be applied to subblock based motion tools, including the affine and SbTMVP modes. More specifically, for an affine merge candidate, the control point motion vectors (CPMVs) may be refined using TM. A same MV offset may be assigned to a (e.g., all) CPMV(s), and the TM cost of the affine candidate may be calculated accordingly. The optimal CPMV offset with the minimum TM cost may be used to refine the corresponding affine candidate. Besides, a non-translation parameter refinement process may be added to uni-predicted affine merge candidates. In the non-translation parameter refinement process, each CPMV may be fixed as base MV in turn, and an offset may be added to the non-translation parameter of affine model by minimizing the template matching cost. Then, the others CPMVs may be calculated according to base MV and refined non-translation parameters.

For a SbTMVP candidate, the initial motion shift may be firstly refined with TM, and the refined motion shift may be utilized to derive subblock temporal motion information. Then, the subblock MV(s) may be further refined with TM. During the refinement, one top row and one left column may be used as the template and (e.g., all) the subblock MVs may share the same MV offset.

A multi-pass decoder-side motion vector refinement may be applied. In the first pass, bilateral matching (BM) may be applied to the coding block. In the second pass, BM may be applied to a (e.g., each) 16x16 subblock within the coding block. In the third pass, MV in a (e.g., each) 8x8 subblock may be refined by applying bi-directional optical flow (BDOF). The refined MVs may be stored for both spatial and temporal motion vector prediction.

In the first pass (Block based bilateral matching MV refinement), a refined MV may be derived by applying BM to a coding block. Similar to decoder-side motion vector refinement (DMVR), in bi-prediction operation, a refined MV may be searched around the two initial MVs (MV0 and MV1) in the reference picture lists L0 and L1. The refined MVs (MV0_pass1 and MV1_pass1) may be derived around the initial MVs based on the minimum bilateral matching cost between the two reference blocks in L0 and L1.

BM performs local search to derive integer sample precision intDeltaMV. The local search applies a 3×3 square search pattern to loop through the search range [-sHor, sHor] in horizontal direction and [-sVer, sVer] in vertical direction, wherein, the values of sHor and sVer may be determined by the block dimension, and the maximum value of sHor and sVer may be 8.

The bilateral matching cost may be calculated as: bilCost = mvDistanceCost + sadCost. When the block size cbW * cbH is greater than 64, mean-removal SAD (MRSAD) cost function may be applied to remove the DC effect of distortion between reference blocks. When the bilCost at the center point of the 3×3 search pattern has the minimum cost, the intDeltaMV local search may be terminated. Otherwise, the current minimum cost search point becomes the new center point of the 3×3 search pattern and continue to search for the minimum cost, until it reaches the end of the search range.

The existing fractional sample refinement may be further applied to derive the final deltaMV. The refined MVs after the first pass may be then derived as:

$$MV0\_pass1 = MV0 + deltaMV$$

$$MV1\_pass1 = MV1 - deltaMV$$

In the second pass (Subblock based bilateral matching MV refinement), a refined MV may be derived by applying BM to a 16×16 grid subblock. For a (e.g., each) subblock, a refined MV may be searched around the two MVs (MV0_pass1 and MV1_pass1), obtained on the first pass, in the reference picture list L0 and L1. The refined MVs (MV0_pass2(sbIdx2) and MV1_pass2(sbIdx2)) may be derived based on the minimum bilateral matching cost between the two reference subblocks in L0 and L1.

For a (e.g., each) subblock, BM performs full search to derive integer sample precision intDeltaMV. The full search has a search range [-sHor, sHor] in horizontal direction and [- sVer, sVer] in vertical direction, wherein, the values of sHor and sVer may be determined by the block dimension, and the maximum value of sHor and sVer may be 8.

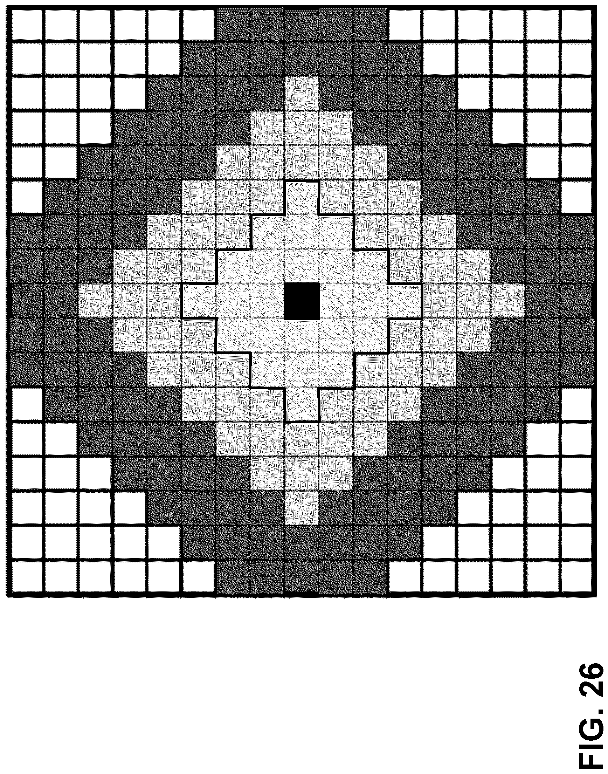

The bilateral matching cost may be calculated by applying a cost factor to the SATD cost between two reference subblocks, as: bilCost = satdCost * costFactor. The search area (2*sHor + 1) * (2*sVer + 1) may be divided up to 5 diamond shape search regions as shown on **FIG. 26.** A (e.g., each) search region may be assigned a costFactor, which may be determined by the distance (intDeltaMV) between a (e.g., each) search point and the starting MV, and a (e.g., each) diamond region may be processed in the order starting from the center of the search area. In a (e.g., each) region, the search points may be processed in the raster scan order starting from the top left going to the bottom right corner of the region. When the minimum bilCost within the current search region is less than a threshold equal to sbW * sbH, the int-pel full search may be terminated, otherwise, the int-pel full search continues to the next search region until (e.g., all) search points are examined. Additionally, if the difference between the previous minimum cost and the current minimum cost in the iteration is less than a threshold that may be equal to the area of the block, the search process terminates.

The DMVR fractional sample refinement may be further applied to derive the final deltaMV(sbIdx2). The refined MVs at second pass may then be derived as:

$$MV0\_pass2(sbIdx2) = MV0\_pass1 + deltaMV(sbIdx2)$$

$$MV1\_pass2(sbIdx2) = MV1\_pass1 - deltaMV(sbIdx2)$$

In the third pass (Subblock based bi-directional optical flow MV refinement), a refined MV may be derived by applying BDOF to an 8×8 grid subblock. For a (e.g., each) 8×8 subblock, BDOF refinement may be applied to derive scaled Vx and Vy without clipping starting from the refined MV of the parent subblock of the second pass. The derived bioMv(Vx, Vy) may be rounded to 1/16 sample precision and clipped between -32 and 32.

The refined MVs (MV0_pass3(sbIdx3) and MV1_pass3(sbIdx3)) at third pass may be derived as:

$$MV0\_pass3(sbIdx3) = MV0\_pass2(sbIdx2) + bioMv$$

$$MV1\_pass3(sbIdx3) = MV0\_pass2(sbIdx2) - bioMv$$

In the fourth pass (Adaptive subblock based bi-directional optical flow MV refinement), a refined MV may be derived by applying BDOF to a 4×4 or 8×8 or 16x16 grid subblock. When a block is smaller than 1024 pixels, the 4×4 grid subblock may be used. Otherwise, 8×8 grid subblock may be used. The MV of a (e.g., each) subblock may be refined in the same way as that used in third pass.

In all aforementioned examples, when wrap around motion compensation is enabled, the motion vectors may be clipped with wrap around offset taken into consideration. The DMVR may be extended to non-equal POC distance cases, and the mean removed equations may be utilized to derive the BDOF MV refinement parameters as:

$$(\Sigma Gx.Gx+R1) * vx + \Sigma Gx.Gy * vy = \Sigma dI . Gx. \rightarrow (\Sigma Gx.Gx+R1) * vx + \Sigma Gx.Gy * vy =$$
$$\Sigma dI . Gx - dM . \Sigma Gx$$

$$\Sigma Gx.Gy * vx + (\Sigma Gy.Gy+R1) * vy = \Sigma dI . Gy \rightarrow \Sigma Gx.Gy * vx + (\Sigma Gy.Gy+R1) * vy =$$
$$\Sigma dI . Gy - dM . \Sigma Gy$$

Adaptive decoder side motion vector refinement method may be an extension of multi-pass DMVR which consists of the two new merge modes to refine MV only in one direction, either L0 or L1, of the bi-prediction for the merge candidates that meet the DMVR conditions. The multi-pass DMVR process may be applied for the selected merge candidate to refine the motion vectors, however either MVDO or MVD1 may be set to zero in the 1$^{st}$ pass (i.e., PU level) DMVR.

The merge candidates for the new merge mode may be derived from spatial neighboring coded blocks, TMVPs, non-adjacent blocks, HMVPs, pair-wise candidate, similar as in the regular merge mode. The difference may be that only the merge candidates meeting DMVR conditions are added into the candidate list. The same merge candidate list may be used by the two new merge modes. In case of candidates containing the inherited BCW weights, DMVR process may be unchanged except the computation of the distortion may be made using MRSAD or MRSATD if the weights are non-equal and the bi-prediction may be weighted with BCW weights. Merge index may be coded as in regular merge mode.

The merge candidates may be adaptively sorted (e.g., reordered) with template matching (TM). The template based reordering method is also known as ARMC-TM (acronym of Adaptive Reordering of Merge Candidates-Template Matching). The reordering method may be applied to regular merge mode, TM merge mode, and affine merge mode (excluding the SbTMVP candidate). For the TM merge mode, merge candidates may be reordered before the refinement process.

An initial merge candidate list may be firstly constructed according to a given checking order, such as spatial, TMVPs, non-adjacent, HMVPs, pairwise, virtual merge candidates. Then, the candidates in the initial list may be divided into several subgroups. For the template matching (TM) merge mode, adaptive DMVR mode, a (e.g., each) merge candidate in the initial list may be firstly refined by using TM/multi-pass DMVR. Merge candidates in a (e.g., each) subgroup may be reordered to generate a reordered merge candidate list and the reordering may be according to cost values based on template matching. The index of a selected merge candidate in the reordered merge candidate list may be signaled to the decoder. For simplification, merge candidates in the list but not in the first subgroup are not reordered. The (e.g., all) zero candidates from the ARMC reordering process may be excluded during the construction of Merge motion vector candidates list. The subgroup size may be set to 5 for regular merge mode and TM merge mode. The subgroup size may be set to 3 for affine merge mode.

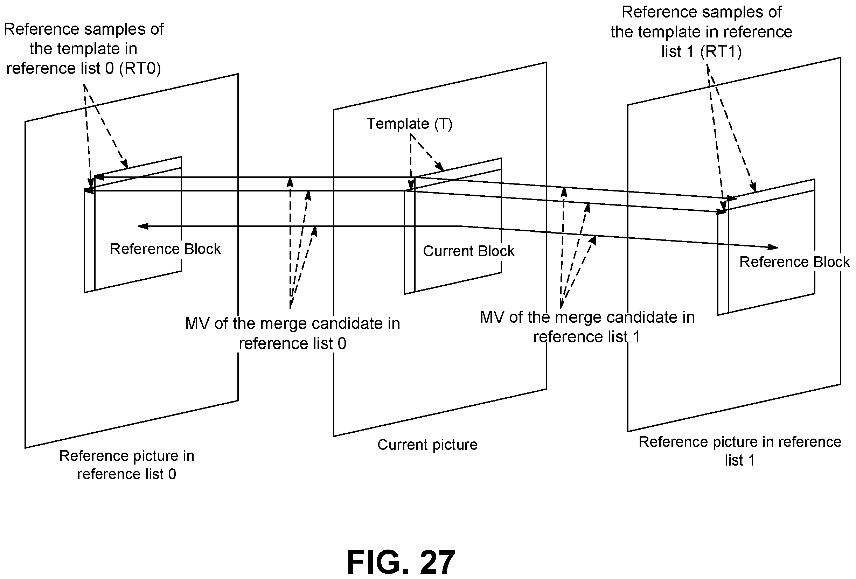

The template matching cost of a merge candidate during the reordering process may be calculated (e.g. measured) by the SAD (Sum of Absolute Differences) between samples of a template of the current block and their corresponding reference samples. The template comprises a set of reconstructed samples neighboring to the current block. Reference samples of the template may be located by the motion information of the merge candidate. When a merge candidate utilizes bi-directional prediction, the reference samples of the template of the merge candidate may be also generated by bi-prediction as shown in FIG. 27. **FIG. 27** shows template and reference samples of the template in reference pictures.

When multi-pass DMVR is used to derive the refined motion to the initial merge candidate list only the first pass (i.e., PU level) of multi-pass DMVR may be applied in reordering, e.g., to refine the initial merge candidate list. When template matching is used to derive the refined motion, the template size may be set equal to 1. Only the above or left template may be used during the motion refinement of TM when the block is flat with block width greater than 2 times of height or narrow with height greater than 2 times of width. TM may be extended to perform 1/16-pel MVD precision. The first four merge candidates may be reordered with the refined motion in TM merge mode.

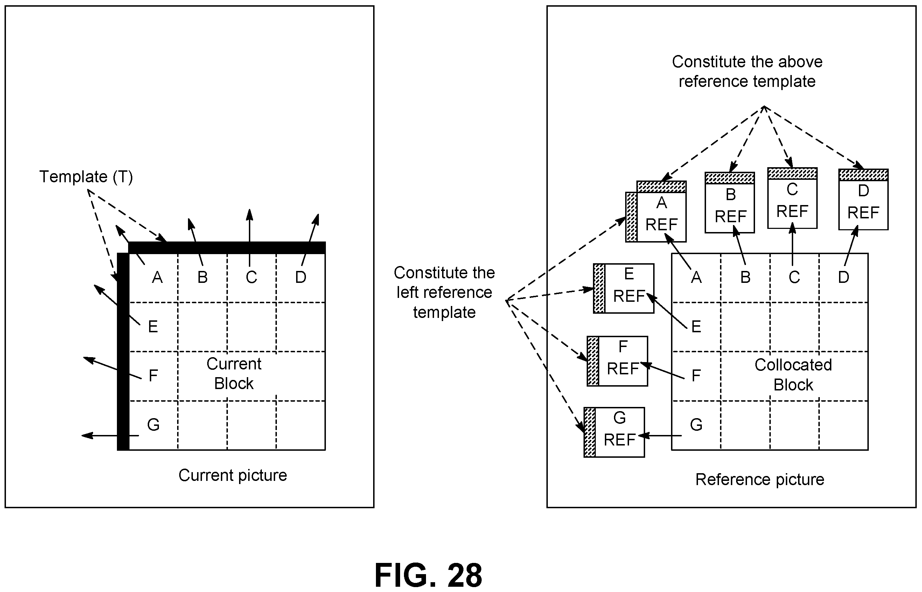

For subblock-based merge candidates with subblock size equal to Wsub × Hsub, the above template may comprise several sub-templates with the size of Wsub × 1, and the left template may comprise several sub-templates with the size of 1 × Hsub. As shown in FIG. 28, the motion information of the subblocks in the first row and the first column of current block may be used to derive the reference samples of a (e.g., each) sub-template. **FIG. 28** shows template and reference samples of the template for block with sub-block motion using the motion information of the subblocks of the current block.

In the reordering process, a candidate may be considered as redundant if the cost difference between a candidate and its predecessor is inferior to a lambda value, e.g., |D1-D2| < λ, where D1 and D2 are the costs obtained during the first ARMC ordering and λ is a Lagrangian parameter used in the RD criterion at encoder side.

The proposed process (e.g., algorithm) may be defined as follows.

A minimum cost difference between a candidate and its predecessor among (e.g., all) candidates in the list may be determined. If/when the minimum cost difference is superior or equal to λ, the list may be considered diverse enough and the reordering may stop. If/when this minimum cost difference is inferior to λ, the candidate may be considered as redundant, and it may be moved at a further position in the list. This further position may be the first position where the candidate may be diverse enough compared to its predecessor.

The process stops, for example, after a finite number of iterations (e.g., in a case where the minimum cost difference is not inferior to λ).

This process may be applied to the Regular, TM, BM and Affine merge modes. A similar process may be applied to the Merge MMVD and sign MVD prediction methods which also use ARMC for the reordering. The value of λ may be set equal to the value λ of the rate distortion criterion used to select the best merge candidate at the encoder side for low delay configuration and to the value λ corresponding to another QP for Random Access configuration. A set of λ values corresponding to each signaled QP offset may be provided in the SPS or in the Slice Header, e.g., for the QP offsets which are not present in the SPS.

The ARMC design may be also applicable to the AMVP mode wherein the AMVP candidates may be reordered according to the TM cost. For the template matching for advanced motion vector prediction (TM-AMVP) mode, an initial AMVP candidate list may be constructed, followed by a refinement from TM to construct a refined AMVP candidate list. In addition, an MVP candidate with a TM cost larger than a threshold, which may be equal to five times of the cost of the first MVP candidate, may be skipped.

When wrap around motion compensation is enabled, the MV candidate may be clipped with wrap around offset taken into consideration.

Merge candidates of one single candidate type, e.g., TMVP or non-adjacent MVP (NA-MVP), may be reordered based on the ARMC-TM cost values. The reordered candidates may then be added into the merge candidate list. The TMVP candidate type may add more TMVP candidates with more temporal positions and different inter prediction directions, e.g., to perform the reordering and the selection. Moreover, NA-MVP candidate type may be further extended with more spatially non-adjacent positions. The target reference picture of the TMVP candidate can be selected from any one of reference picture in the list according to a scaling factor. The selected reference picture may be the one whose scaling factor is the closest to 1.

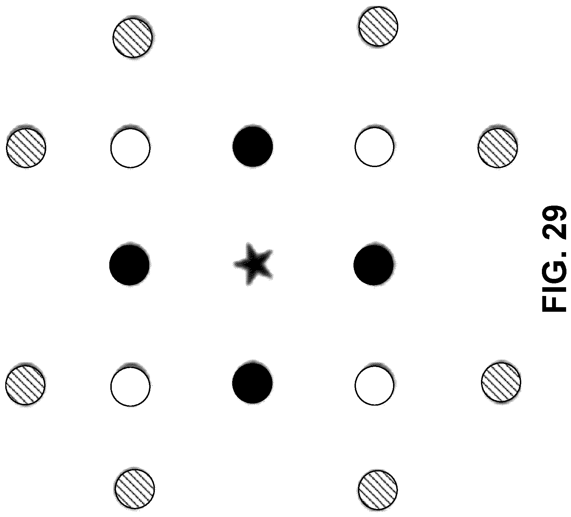

The MMVD offsets may be extended for MMVD and affine MMVD modes. Additional refinement positions along k×π/8 diagonal angles may be added as shown in FIG. 29, thus increasing the number of directions from 4 to 16. **FIG. 29** shows additional directions along k×π/8 diagonal angles (positions identified by block circles may be used in the anchor). Second, based on the SAD cost between the template (e.g., one row above and one column left to the current block) and its reference for a (e.g., each) refinement position, (e.g., all) the possible MMVD refinement positions (16×6) for a (e.g., each) base candidate may be reordered. Finally, the top 1/8 refinement positions with the smallest template SAD costs may be kept as available positions, consequently for MMVD index coding. The MMVD index may be binarized by the rice code with the parameter equal to 2. The affine MMVD reordering may be extended, in which additional refinement positions along k×π/4 diagonal angles may be added. After reordering, top 1/2 refinement positions with the smallest template SAD costs may be kept.

The first N motion candidates in the candidate list before being reordered may be utilized as the base candidates for MMVD and affine MMVD. For MMVD, N may be equal to 3 and, for affine MMVD, N ∈ [1, 3], e.g., depending on the neighboring block affine flags. Two ways of adding MMVD offsets may be allowed, including the 'two-side' and 'one-side', e.g., depending on whether the offset of the other reference picture list is mirrored or directly set to zero. Which way is applied to one block may be dependent on the TM cost.

A new mode may be used to represent a CU motion data, which basically consists in an AMVP motion predictor in one inter direction, i.e., associated with one reference picture list, and a merge mode in the opposite direction, i.e., associated with the other reference picture list.

This MV refinement mode may be allowed in the case where the selected merge predictor and the AMVP predictor are such that there is at least one reference picture available in the past and one reference picture available in the future.

AMVP part of the mode may be signaled as a regular uni-directional AMVP, i.e., reference index and MVD are signaled. Besides, it has a derived MVP index if template matching is used (i.e., no signaling) or a MVP index is signaled when template matching is disabled.

For AMVP direction (i.e., reference picture list) LX, X can be 0 or 1, the merge part in the other direction (1 - LX) may be implicitly derived by minimizing the bilateral matching (BM) cost between the AMVP predictor and a merge predictor. For a (e.g., every) merge candidate in the merge candidate list which has that other direction (1 - LX) motion vector, the bilateral matching cost may be calculated using the merge candidate MV and the AMVP MV. The merge candidate with the smallest cost may be selected. The bilateral matching refinement may be applied to the coding block with the selected merge candidate MV and the AMVP MV as a starting point.

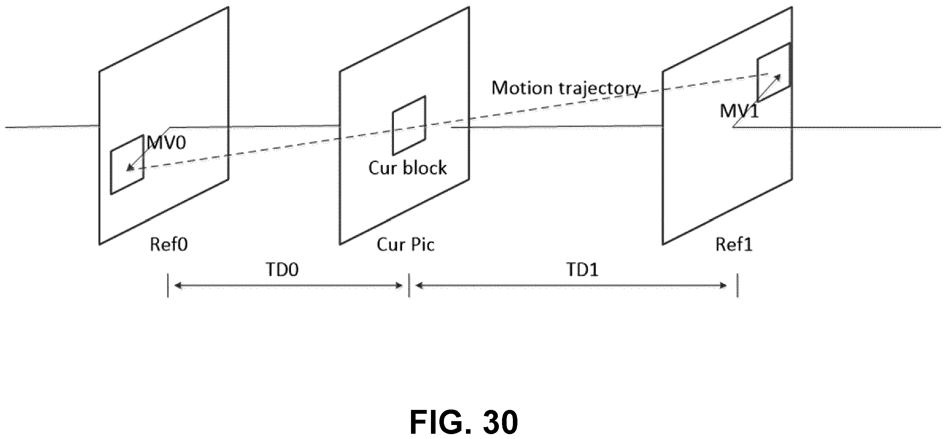

The following section briefly explains the principle of bilateral matching motion vector refinement. In bi-prediction operation, a refined MV may be searched around the two initial MVs (MV0 and MV1) in the reference picture lists L0 and L1, as illustrated by **FIG. 30.** This is known as bilateral matching principle. The refined MVs may be derived around the initial MVs based on the minimum bilateral matching cost between the two reference blocks in L0 and L1.

BM performs local search to derive integer sample precision intDeltaMV. The local search applies a (e.g., $3\times3$) square search pattern to loop through the search range [-sHor, sHor] in horizontal direction and [-sVer, sVer] in vertical direction.

The bilateral matching cost may be calculated as: bilCost = mvDistanceCost + sadCost, where mvDistanceCost may be representative of the motion vector coding cost and increases as a function of the MV magnitude. When the bilCost at the center point of the (e.g., $3\times3$) search pattern has the minimum cost, the intDeltaMV local search may be terminated. Otherwise, the current minimum cost search point becomes the new center point of the (e.g., $3\times3$) search pattern and continue to search for the minimum cost, until it reaches the end of the search range.

The existing fractional sample refinement may be further applied to derive the final deltaMV. The refined MVs after the first pass may be then derived as:

$$MV0\_pass1 = MV0 + deltaMV$$

$$MV1\_pass1 = MV1 - deltaMV$$

The BM-AMVP-merge mode presented above, also called MVP-merge mode, may be (e.g., only) used (e.g., activated) for B picture which have at least one reference picture in the past and at least one reference picture in the future, in terms of picture display order.

In other examples, it may be possible to activate (e.g., use) the AMVP-Merge mode introduced above for low-delay pictures. An inter coded current picture is said to be low-delay if its two reference pictures are both in the past or both in the future, i.e., have Picture Order Count (POC, i.e. picture index in display order) lower than the POC of current picture.

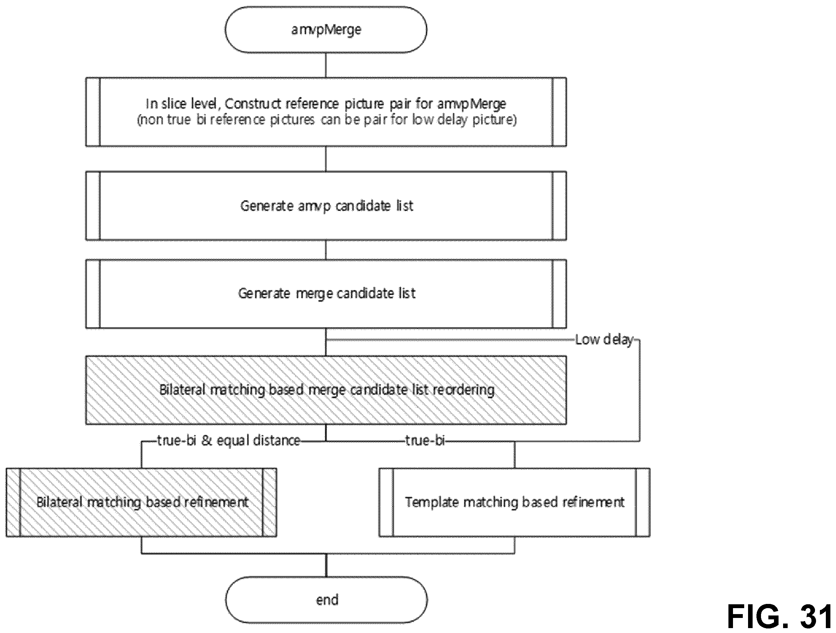

To do so, it proposed to allow AMVP-Merge for low-delay pictures, e.g., by removing the bilateral matching reordering and refinement from the AMVP-Merge prediction mode. **FIG. 31** illustrates the principle of AMVP-merge enabling for bi-predicted block with both reference pictures in the past or in the future. Therefore, one or more of the following aspects may be applied. The amvpMerge may be enabled for a bi-predicted block even if the picture is of low-delay type, i.e., the reference picture pair is not truly bi-directional. Additionally, the restriction condition on the resampled, long-term and WP reference picture may be relaxed for low-delay picture cases. To deactivate bilateral matching reordering in low-delay blocks (i.e., blocks with its two references picture in the past or in the future), BM cost of an amvpMerge candidate which is not truly bi-directional may be set to be the maximum value during merge candidate reordering.

Compression efficiency may be improved, for example, by improving the performance of inter coding. In one or more examples, the performance of inter coding may be increased by improving any one of template matching based motion vector refinement, derivation and sorting (a.k.a. reordering).

In some (e.g., all) template matching-based inter coding modes, template matching operates (e.g., always) by considering a same type of template area around a current block to predict and its (e.g., candidate) reference block in a reference picture. In an example, the top-left template area is (e.g., always) considered as the region where to compute the template matching cost in inter template matching.

In some other non-inter coding tools which may involve some template-based processing, e.g., intra TMP coding mode, CCLM (cross-component linear model) or even LIC (Local Illumination Compensation), some adaptive template mechanism may be used, which allows taking some decision based on some various template shapes.

Adaptive template for inter template matching tools is thus proposed, e.g., to improve compression efficiency over fixed template inter template matching tools.

In an example, the type of templates used to determine a motion vector predictor of a given group of samples (e.g., of a CU) may be (e.g., explicitly) signaled in the bitstream. This may be used, for example, in AMVP mode. The type of template, for the group of samples, may be chosen by an encoder in a set of template areas. In an example, the set of template areas comprises a top-left template area, a top-only template area, a left-only template area. Extended template may be used. That is, a left-only template area may comprise not only samples from the left side of current block, but also samples on the bottom-left and upper-left sides of current block. Similarly, a top-only template area may comprise not only samples from the upper side of current block, but also samples on the upper-left and upper-right sides of current block.

In another example, the motion vectors of selected merge candidates may be refined by using a template area selected a set of template areas. This may be used, for example, in merge mode. In an example, the set of template areas comprises a top-left template area, a top-only template area, a left-only template area. Extended template may be used. The type of template used may be (e.g., explicitly) signaled in the bitstream as for AMVP.

In a variant, the type of template area used in merge mode may be (e.g., implicitly) derived at decoder and encoder sides, e.g., together with the motion information. For instance, a type of template area used for template matching may be associated with a (e.g., each) merge candidate. A current group of samples (e.g., of a CU) may thus inherit the template type from a selected merge candidate. In the following, the terms CU, block and group of samples may be used interchangeably.

In another example, sub-block based template matching may also use adaptive template (e.g., adaptative template shape) for the TM-based refinement of sub-block in a current CU.

In another example, ARMC-TM mode may also employ adaptive template areas. To do so, merge candidates may be sorted (e.g., reordered) with a template matching cost using a selected template area. In a variant, ARMC-TM may use a fixed (e.g., a top-left) template area for merge candidate reordering, while MV refinement may use (e.g., proceed on) an adaptive template (e.g., an adaptative template shape).

In yet another example, ARMC-TM may do some reordering between merge candidates that use different template shapes for their motion vector refinement. In this case, a same template area (e.g., a same template shape) may be considered for a given merge candidate, for both its motion vector refinement and its reordering with other candidates. To do so, when comparing the TM cost of two candidates with different associated template areas (e.g., shapes), a normalized template cost per unity of surface may be used as the sorting metric.

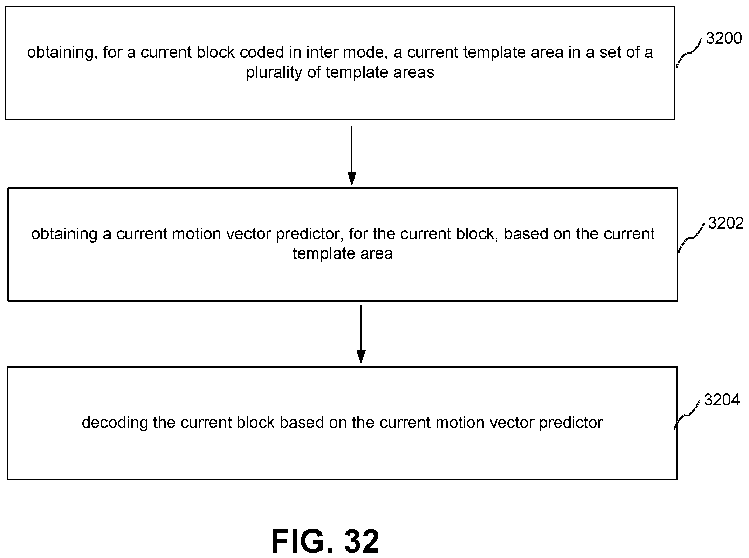

**FIG. 32** is a block diagram illustrating a decoding method according to one or more embodiments.

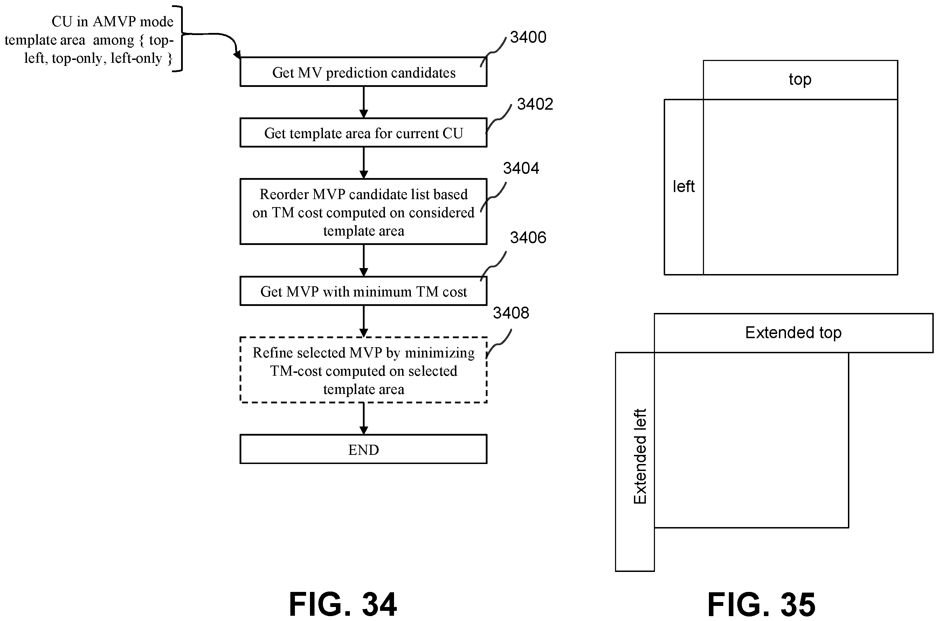

A current template area is obtained (3200), for a current block coded in inter mode. In an example, the current template area is selected in a set S of a plurality of template areas. The set S may comprise top-left, top-only or left-only areas as shown on FIG. 35. In another examples, extended templates may be added in the set S. The template areas comprise reconstructed samples neighboring the current block. In an example, the current template area may be identified by an identifier decoded from the bitstream. In other examples, the current template area may be derived from information associated with a merge candidate.

A current motion vector predictor is obtained (3202) for the current block based on the current template area. In an example, the current motion vector predictor is obtained by computing TM-costs using the current template area.

The current block is decoded (3204) based on the current motion vector predictor (MVP). In an example, the MVP may be used directly to decode the current block. In another example, a MVD may be added to the current MVP.

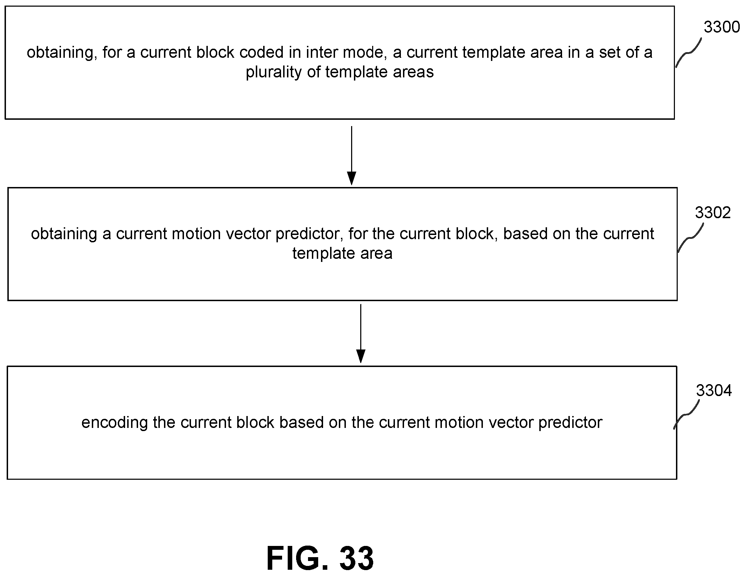

**FIG. 33** is a block diagram illustrating an encoding method according to one or more embodiments.

A current template area is obtained (3300), for a current block coded in inter mode. In an example, the current template area is selected in a set S of a plurality of template areas. The set S may comprise top-left, top-only or left-only areas as shown on FIG. 35. In another examples, extended templates may be added in the set S. The template areas comprise reconstructed samples neighboring the current block. The current template area may be obtained by RD optimization.

A current motion vector predictor is obtained (3302) for the current block based on the current template area. In an example, the current motion vector predictor is obtained by computing TM-costs using the current template area.

The current block is encoded (3304) based on the current motion vector predictor (MVP). In an example, an identifier identifying the current template area in the set may be encoded for the current block.

A computer program is also disclosed that comprises program code instructions for implementing the decoding method or the encoding method when executed by a processor.

A computer readable storage medium is also disclosed that has stored thereon instructions for implementing the decoding method or the encoding method.

A signal comprising video data, formed by performing the encoding method is disclosed. The signal may comprise a syntax element (e.g., an identifier) identifying the current template area in the set S.

In other variants (not represented on FIG. 35), the reconstructed top-left pixel may be included in one or more template areas.

**FIG. 34** is a block diagram illustrating a motion vector predictor (MVP) derivation method for the case of an inter block (e.g., an inter CU), e.g., coded in whole-block-based AMVP mode, according to one or more embodiments. This process may apply at both decoder and encoder sides.

The input to the method is a CU in AMVP mode, and a type (or shape) of template area used for the current CU, e.g., for template matching costs computations. In an example, the type may be one of the set S={top-left, top-only or left-only}. In another examples, extended templates may be added in the set S. This template area (e.g., template shape) may be obtained at decoder side when decoding the (e.g., input) bitstream. At encoder side, the template area (e.g., shape) may be evaluated among the several possible ones. In an example, at encoder side, one or more (e.g., all) template areas (e.g., shapes) of the set S may be tested by rate-distortion optimization and the one leading to minimum rate distortion cost may be selected for the current CU. Said otherwise, the template area (e.g., shape) considered in the method of FIG. 34 at encoder side is a candidate template area that may be selected as current CU's template area (e.g., shape) if it leads to the minimum rate distortion cost during the rate distortion optimized coding mode choice that takes place on encoder side. At decoder side, the template area (e.g., shape) used for the current CU in the method of FIG. 34 may be obtained by decoding a syntax element (e.g., an identifier, indicator or index) identifying the template area used for the current CU in the set S.

A list of (e.g., AMVP) motion vector predictor candidates is obtained (e.g., constructed) for the current CU (3400). The AMVP motion vector predictor (MVP) candidate list may include multiple (e.g., two) elements. One or more of the following candidates may be used to construct an AMVP MVP candidate list on the encoder and decoder sides: multiple (e.g., up to four (4)) spatial candidates; (e.g., up to one (1)) temporal MVP candidate; (up to four (4)) History-Based Motion Vector Prediction (HMVP) candidates; and/or Zero motion vector(s), for example, if needed to get two (2)) MVP candidates in the final list.

Next, the template area considered for TM-based cost computations is obtained (3402). Next, the MVP candidate list is sorted (e.g., reordered). Said otherwise, the MVP candidate list is reordered (sorted) (3404) based on TM cost computed on considered template area. In an example, MVP candidates are sorted by ascending template matching costs. The MVP candidate with minimum TM cost is then selected (3406) as the MVP of current CU. Optionally, the selected MVP may be refined (3408) by a TM-cost minimization procedure. An example of MVP refinement is disclosed with respect to FIG. 25. The MVP (e.g., refined MVP) may then be used to decode (encode respectively) a MV associated with the current CU. In an example, the MV of the current block may be set to the MVP. In another example, a MVD may be added to the MVP to obtain the MV on the decoder side (MVD being subtracted from the MV on the encoder side).

More than one MVP may be derived for the current CU, e.g., one for reference List 0 and one for reference List 1.

The method for Motion Vector Predictor (MVP) derivation performs TM cost computation in a template area taken (e.g., selected) from S, e.g., taken among the top-left area (e.g., region) around current CU, the top-only part of the template region, or the left-only part of the template region shown on **FIG. 35** and also on FIG. 27. In another example, the set S further comprises extended templates, e.g., extended top-left area, the top-only part of the extended top-left area, the left-only part of the extended top-left area as depicted on the bottom of FIG. 35. The set S may comprise a subset of all these template areas.

Due to the introduction of various template areas (e.g., shapes) in the Inter-TM mode, more diversity may be obtained in the set of MV (e.g., MVP) that can be used to code an inter CU in AMVP mode. This is expected to bring compression efficiency improvement.

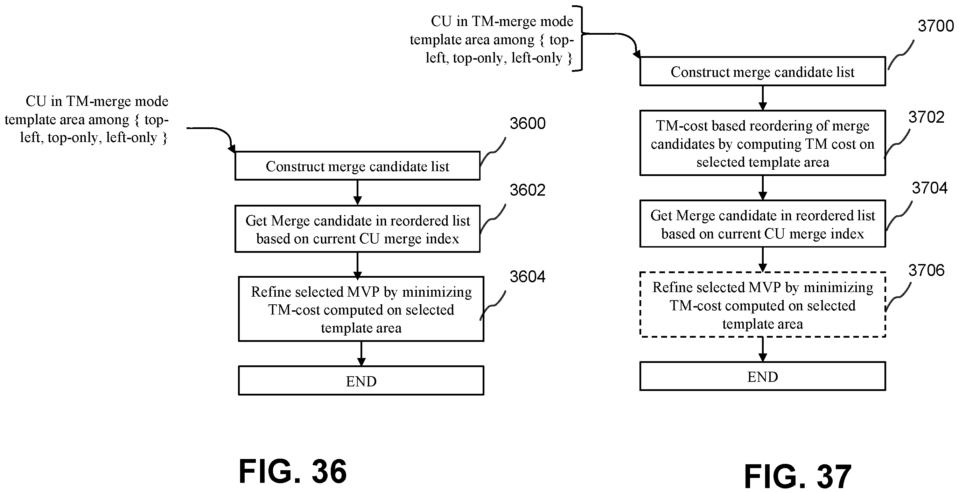

**FIG. 36** is a block diagram illustrating motion vector predictor derivation method for an inter CU in merge mode, e.g., in whole-block based merge mode, according to one or more embodiments. The example of the TM-merge mode is considered on FIG. 36. This method may apply at both decoder and encoder sides.

The input to the method is a CU in TM-merge mode (e.g., with an associated merge index), and a type (or shape) of template area for the current CU, e.g., for template matching costs computations. In an example, the type may be one in the set S={top-left, top-only or left-only}. In another examples, extended templates may be added in the set S as shown on FIG. 35.

A list of merge candidates may be obtained (e.g., constructed) for the current CU (3600). As an example, the merge candidate list may be constructed with multiple (e.g., 5) merge candidates. One or more spatial positions may be considered to retrieve potential candidates. Spatial positions may be visited according to an order, such as, for example, the following order: (1) Left (A1); (2) Above (B1); (3) Above right (B0); (4) Left bottom (A0); and (5) Above left (B2). The symbols A0, A1, B0, B1, and B2 may denote the spatial positions shown by example in FIG. 12. Temporal merge candidates may be further added. Other candidates may be added, e.g., HMVP candidates; pairwise average candidates; zero MV candidates, and/or NASMVP candidates. The methods illustrated on FIG. 13 or 14 may be used.

The merge candidate for current CU is then obtained (3602) based on the merge list and based on the merge index assigned to current CU. Said otherwise, the candidate of the list indexed by the merge index assigned to current CU is selected as the merge candidate for current CU. The derived merge candidate for the current CU may consist in uni-prediction motion data or bi-prediction motion data, i.e., including motion information for reference list L0 and motion information for reference list L1.

The motion vector(s) (e.g., motion vector predictor) associated with the selected merge candidate is refined (3604) through a template-matching cost minimization procedure using the (e.g., selected) template area of the current CU. Again, in this minimization, template cost computation considers the template area selected for current CU. An example of MVP refinement is disclosed with respect to FIG. 25. Once this refinement is done, the method of FIG. 36 is over. The current CU may thus be decoded (encoded respectively) using the refined motion vector(s).

**FIG. 37** is a block diagram illustrating motion vector predictor derivation method for an inter CU in merge mode, e.g., in whole-block based merge mode. The example of the TM-merge mode with reordering (e.g., ARMC-TM) is considered on FIG. 37. This method may apply at both decoder and encoder sides.

The input to the method is a CU in TM-merge mode (e.g., with an associated merge index), and a type (or shape) of template area for the current CU, e.g., for template matching costs computations. In an example, the type may be one of the set S={top-left, top-only or left-only}. In another examples, extended templates may be added in the set S as shown on FIG. 35.

A list of merge candidates may be obtained (e.g., constructed) for the current CU (3700). Then, this list is reordered (3702), e.g., by sorting candidates by ascending TM costs. In an example, these TM costs are computed over the template area assigned to current CU, and adaptively selected in S, e.g. among the top-left, top-only and left-only area of the template region and/or their extended versions shown FIGs 27 and 35.

The merge candidate for current CU is then selected (3704) based on the reordered merge list and based on the merge index assigned to current CU. Said otherwise, the candidate of the reordered list indexed by the merge index assigned to current CU is selected as the merge candidate for current CU.

The derived merge candidate for the current CU may consist in uni-prediction motion data or bi-prediction motion data, i.e., including motion information for reference list L0 and motion information for reference list L1.

Optionally, the motion vector(s) (e.g., motion vector predictors) associated with the selected merge candidate may be refined (3706) through a template-matching cost minimization procedure. Again, in this minimization, template cost computation considers the template area selected for current CU. An example of MVP refinement is disclosed with respect to FIG. 25. Once this refinement is done, the method of FIG. 37 is over. The current CU may thus be decoded (encoded respectively) using the motion vector(s) possibly refined.

Additionally, the template area used in merge mode (either with or without ARMC-TM) may be (e.g., explicitly) signaled in bit-stream or derived (e.g., implicitly) without any signaling. Indeed, the type of template area used in merge mode may be derived at decoder and encoder sides, e.g., together with the motion information. For instance, a type of template area used for template matching may be associated with a (e.g., each) merge candidate. Thus, the current CU may inherit the template type from selected merge candidate. In this case, the type (or shape) of template area for the current CU, e.g., for template matching costs computations, is not an input of the method.

In an example, in merge mode, ARMC-TM may use fixed top-left template area for merge candidate reordering (3702), while MV refinement (3706) may use an adaptive template area (e.g., shape), e.g., either explicitly signaled or implicitly derived.

In another example, in merge mode, ARMC-TM may do some reordering between merge candidates that use different template types (e.g., shapes) for their MV refinement, e.g., especially in a case where a template area used for template matching is associated with each merge candidate. In this case, a same template area (e.g., shape) may be considered for a given merge candidate, for its MV refinement and its reordering with other candidates. To do so, when comparing the template matching cost (TM cost) of two candidates associated with different template areas (e.g., shapes), a normalized template cost per unity of surface may be used as the sorting metric. For example, the TM cost of a merge candidate may be the SAD between samples of a template area of the current block and their corresponding reference samples. In order to compare the TM cost of two candidates associated with different template areas, their respective TM cost may be divided by the surface (e.g., in number of samples) of the template area used to compute the TM cost.

The previous examples disclosed for cases of whole-block-based AMVP and whole-block-based merge mode., may be applied similarly to the case of sub-block-based inter prediction mode, i.e., affine AMVP mode and sub-block-based merge mode.

In an example, the proposed adaptive template area usage (e.g., selection) may be used for sub-block-based merge mode. Typically, the template matching based refinement of CPMVs may rely either on top-left, top-only or left-only template area for template matching cost calculations, or any extended versions of these template areas. That is, for a (e.g., each) sub-block in the considered CU, the top-left, top-only or left-only template-based TM cost computation may be used.

In the case of SbtTMVP, the proposed adaptive template area usage (e.g., selection) may be applied to both the TM search of the shift vector and the sub-block by sub-block MV refinement stage.

In another example, the proposed adaptive template area usage may be extended to the TM-based sorting of MMVD merge candidates, both in whole-block-based and sub-block-based merge modes.

In another example, the proposed adaptive template area usage (e.g., selection) for inter template matching may also be used for the AMVP-merge mode, e.g., the bilateral matching AMVP-merge mode. This mode consists in an AMVP motion predictor in one inter direction, i.e. associated with one reference picture list, and a merge mode in the opposite direction, i.e. associated with the other reference picture list.

In another example, the proposed adaptive template usage (e.g., selection) for inter TM may be synergized with other coding modes. For example, a same template area (e.g., shape) may be used for the MV derivation, reordering, refinement, and for the LIC (Local Illumination Compensation). For example, one may use the template area (e.g., shape) identifier (e.g., index) attached to the LIC information which may be propagated/inherited from CU to CU through a LIC merge mechanism. In this case, the template area for a CU used for the MV derivation, reordering, refinement may be implicitly derived from another tool. A flag may thus be signaled at CU level to indicate if the proposed adaptive template area is used for a current CU.

The proposed adaptive template area usage (e.g., selection) for TM inter may be activated (deactivated respectively) by means of a dedicated sequence parameter set (SPS) signaling flag.

The proposed adaptive template area usage (e.g., selection) for TM inter may be activated (deactivated respectively) by means of a dedicated picture parameter set (PPS) signaling flag.

The proposed adaptive template area usage (e.g., selection) for TM inter may be activated (deactivated respectively) by means of a dedicated picture header syntax element.

The proposed adaptive template area usage (e.g., selection) for TM inter may be activated (deactivated respectively) by means of a dedicated slice header syntax element.

The proposed adaptive template area usage (e.g., selection) for TM inter may be activated (deactivated respectively) by means of a dedicated sub-picture level syntax element.

The proposed adaptive template area usage (e.g., selection) for TM inter may be activated (deactivated respectively) by means of a dedicated CTU (coding tree unit) level syntax element.

One or more embodiments provide a computer program comprising instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various methods and aspects described herein can be used to modify one or more modules. For example, the intra predictors and inter predictors described with respect to FIGs. 2 and 3 may be implemented as one or more modules and modified according to the various embodiments of the present disclosure.

The various embodiments described herein provide at least the following features, devices or aspects, alone or on any combination, across various claim categories and types:

> i. Encoding, into coded video data, syntax elements that can enable the decoder to decode the coded video data, according to any of the embodiments described herein.

> ii. A bitstream that includes one or more of the described syntax elements, or variations thereof, whether transmitted, stored, or otherwise made available.

> iii. Creating, transmitting, receiving, and/or decoding of the bitstream.

> iv. An electronic device (e.g., TV, set-top box, mobile phone, tablet, etc.) that tunes a channel to receive a bitstream or that receives such bitstream over the air. The electronic device decodes the syntax elements from the bitstream, and, optionally, displays (e.g., via a monitor or other type of display) a resulting image.

Various numeric values are used in the present application. Such specific values are for example purposes and the embodiments described are not limited to these specific values.

Various methods are described herein, and such methods comprise one or more steps or actions for achieving the described method. Unless a specific order of steps or actions may be required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present disclosure may refer to "determining" various pieces of information. Determining information may include one or more of, for example, estimating, calculating, predicting, or retrieving (e.g., from memory) the information.

The present disclosure may refer to "accessing" various pieces of information. Accessing information may include one or more of, for example, receiving, retrieving (e.g., from memory), storing, moving, copying, calculating, determining, predicting, or estimating the information. Similarly, the present disclosure may refer to "receiving" various pieces of information. Receiving information may include one or more of, for example, accessing or retrieving (e.g., from memory) the information.

"Decoding," as used herein, encompasses all or part of the processes performed, for example, on an encoded sequence to produce an output suitable for display. In some embodiments, such processes include one or more of the processes typically performed by a decoder, for example, entropy decoding, inverse quantization, etc. Whether the phrase "decoding process" may be intended to refer to a subset of operations or generally to the broader decoding process will be clear based on the context of the specific description and will be well understood by those skilled in the art.

"Encoding," as used herein, encompasses all or part of the processes performed, for example, on input video data an order to produce an encoded bitstream. Additionally, the terms "reconstructed" and "decoded" may be used interchangeably, the terms "encoded" or "coded" may be used interchangeably, the terms "image," "picture," "sub-picture," "slice," and "frame" may be used interchangeably, and the terms "pixel" and "sample" may be used interchangeably.

The present disclosure refers to information, for example, syntax elements, that can be transmitted or stored. Such information can be packaged or arranged in a variety of manners, including for example manners common in video standards such as putting the information into a sequence parameter set (SPS), a picture parameter set (PPS), a network abstraction layer (NAL) unit, a header (for example, a NAL unit header, or a slice header), or an SEI message. Other manners are also available, including, for example, manners that are common for system level or application-level standards such as signaling the information into one or more of the following:

i. session description protocol (SDP), for example as described in RFCs and/or used in conjunction with real-time transport protocol (RTP) transmission.

ii. hypertext transfer protocol (HTTP) live Streaming (HLS) manifest transmitted over HTTP.

iii. dynamic adaptive streaming over HTTP (DASH) media presentation description (MPD) descriptors, for example as used in DASH and transmitted over HTTP.

iv. RTP header extensions, for example as used during RTP streaming.

v. International Organization for Standardization (ISO) base media file format, for example, as used in Omnidirectional MediA Format (OMAF).

As used herein, "signal" and "signaling" refer to, among other things, indicating information to a decoder. For example, in some embodiments the encoder signals a quantization matrix for de-quantization, whereby the same parameter may be used for both encoding and decoding. In some embodiments, the signaling may be explicit, such that information (e.g., a particular parameter) may be transmitted to the decoder enabling the decoder to use the same particular parameter. In some embodiments, the signaling may be implicit, in that the information (e.g., a particular parameter) may be indicated based on other information at or transmitted to the decoder or derived or selected by the decoder based on information available at the decoder. By not transmitting the information (e.g., the particular parameter), a bit savings may be thus realized in some embodiments. In some embodiments, one or more syntax elements or flags are used to signal information to a decoder. While the preceding relates to the verb form of the word "signal", the word "signal" can also be used herein as a noun.

In some embodiments, signals may be produced that are formatted to carry information that may be stored or transmitted. Such information may include, for example, instructions for performing a method, or data produced by one of the described implementations (e.g., a bitstream of a described embodiment). Such a signal may be formatted, for example, as an electromagnetic wave or as a baseband signal. The formatting may include, for example, encoding a data stream and modulating a carrier with the encoded data stream. The information that the signal carries may be, for example, analog or digital information. The signal may be transmitted over a variety of different wired or wireless links and may be stored on a processor-readable medium.

It may be to be understood that use of any of the following "/", "and/or", and "at least one of" may be intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present disclosure or the following claims. Although features and elements are described herein in particular combinations, those of ordinary skill in the art will appreciate that such features or elements may be used alone or in any combination with the other features and elements. It may be understood, therefore, that the overall teachings of the present disclosure are not limited to the particular embodiments, implementations, and examples disclosed herein, but are intended to cover variations, modifications, and alternatives as defined by the appended claims and any and all equivalents thereof.

**Claims**

1. A decoding method comprising:

   obtaining, for a current block coded in inter mode, a current template area in a set of a plurality of template areas;
   obtaining a current motion vector predictor, for the current block, based on the current template area; and
   decoding the current block based on the current motion vector predictor.

2. A decoding device comprising one or more processors and at least one memory coupled to said one or more processors, wherein said one or more processors are configured to perform :

   obtaining, for a current block coded in inter mode, a current template area in a set of a plurality of template areas;
   obtaining a current motion vector predictor, for the current block, based on the current template area; and
   decoding the current block based on the current motion vector predictor.

3. The method of claim 1 or the device of claim 2, wherein obtaining, for the current block coded in inter mode, the current template area comprises decoding an identifier identifying the current template area in the set.

4. The method of claim 1 or 3 or the device of claim 2 to 3, wherein obtaining the current motion vector predictor comprises:

   obtaining a list of motion vector predictor candidates ; and
   determining, among the motion vector predictor candidates of the list, the motion vector predictor candidate associated with a smallest template matching cost computed on the current template area, said determined motion vector predictor candidate being the current motion vector predictor.

5. The method of claim 4 or the device of claim 4, the method further comprising or the one or more processors being further configured to perform refining the current motion vector predictor by minimizing a template matching cost computed on the current template area with motion vectors around the current motion vector predictor.

6. The method of claim 1 or the device of claim 2, wherein obtaining, for the current block coded in inter mode, the current template area comprises deriving the current template area from information associated with a merge candidate.

7. The method of claim 1 or 6 or the device of claim 2 or 6, wherein obtaining the current motion vector predictor comprises:

   obtaining a list of merge candidates ;
   determining a motion vector predictor candidate in the list based on a merge index; and
   refining the determined motion vector predictor candidate by minimizing a template matching cost computed on the current template area with motion vectors around the determined motion vector predictor candidate, the refined motion vector predictor candidate being the current motion vector predictor.

8. The method of claim 1 or 6 or the device of claim 2 or 6, wherein obtaining the current motion vector predictor comprises:

   obtaining a list of merge candidates ;
   reordering the list of merge candidates in ascending order of template matching cost computed on the current template area; and
   determining a motion vector predictor candidate in the reordered list based on a merge index, said determined motion vector predictor candidate being the current motion vector predictor.

9. The method of claim 8 or the device of claim 8, the method further comprising or the one or more processors being further configured to perform refining the current motion vector predictor by minimizing a template matching cost computed on the current template area with motion vectors around the current motion vector predictor.

10. An encoding method comprising:

obtaining, for a current block coded in inter mode, a current template area in a set of a plurality of template areas;
obtaining a current motion vector predictor, for the current block, based on the current template area; and
encoding the current block based on the current motion vector predictor.

11. An encoding device comprising one or more processors and at least one memory coupled to said one or more processors, wherein said one or more processors are configured to perform :

obtaining, for a current block coded in inter mode, a current template area in a set of a plurality of template areas;
obtaining a current motion vector predictor, for the current block, based on the current template area; and
encoding the current block based on the current motion vector predictor.

12. The method of claim 10 or the device of claim 11, the method further comprising or the one or more processors being further configured to perform encoding an identifier identifying the current template area in the set.

13. The method of claim 10 or 12 or the device of claim 11 to 12, wherein obtaining the current motion vector predictor comprises:

obtaining a list of motion vector predictor candidates ; and
determining, among the motion vector predictor candidates of the list, the motion vector predictor candidate associated with a smallest template matching cost computed on the current template area, said determined motion vector predictor candidate being the current motion vector predictor.

14. The method of claim 13 or the device of claim 13, the method further comprising or the one or more processors being further configured to perform refining the current motion vector predictor by minimizing a template matching cost computed on the current template area with motion vectors around the current motion vector predictor.

15. The method of claim 10 or the device of claim 11, wherein obtaining, for the current block coded in inter mode, the current template area comprises deriving the current template area from information associated with a merge candidate.

16. The method of claim 10 or 15 or the device of claim 11 or 15, wherein obtaining the current motion vector predictor comprises:

obtaining a list of merge candidates ;
determining a motion vector predictor candidate in the list based on a merge index; and
refining the determined motion vector predictor candidate by minimizing a template matching cost computed on the current template area with motion vectors around the determined motion vector predictor candidate, the refined motion vector predictor candidate being the current motion vector predictor.

17. The method of claim 10 or 15 or the device of claim 11 or 15, wherein obtaining the current motion vector predictor comprises:

obtaining a list of merge candidates ;
reordering the list of merge candidates in ascending order of template matching cost computed on the current template area; and
determining a motion vector predictor candidate in the reordered list based on a merge index, said determined motion vector predictor candidate being the current motion vector predictor.

18. The method of claim 17 or the device of claim 17, the method further comprising or the one or more processors being further configured to perform refining the current motion vector predictor by minimizing a template matching cost computed on the current template area with motion vectors around the current motion vector predictor.

**FIG. 1**

EP 4 730 803 A1

FIG. 2

CODED VIDEO
BITSTREAM

330

ENTROPY
DECODER

335

IMAGE
PARTITIONER

340

INVERSE
QUANTIZER

350

INVERSE
TRANSFORMER

RECONSTRUCTED
RESIDUAL BLOCKS

390

PREDICTION
ENHANCER

PREDICTION
BLOCKS

355

RECONSTRUCTED
BLOCKS

370

360

INTRA PREDICTOR

375

MOTION
COMPENSATOR

380

365

IN-LOOP
FILTERS

RECONSTRUCTED
VIDEO

REFERENCE
PICTURE
BUFFER

300

**FIG. 3**

FIG. 4

EP 4 730 803 A1

FIG. 5

FIG. 6

FIG. 7

FIG. 8

SPLIT_BT_VER

SPLIT_BT_HOR

SPLIT_TT_VER

SPLIT_BT_HOR

```
                    ┌──────────────┐
                    │   CU_Skip ?  │
                    └──────────────┘
        YES                              NO
   ┌──────────────┐              ┌──────────────┐
   │  Merge_idx   │              │  Merge_flag  │
   └──────────────┘              └──────────────┘

   Merge-SKIP
   From merge_idx:               ┌──────────────┐
   -predType(P/B)                │  Merge_flag ?│
   -ref_idx(es)                  └──────────────┘
   -MV(s)                YES                      NO

              ┌──────────────┐        ┌──────────────┐
              │  Merge_idx   │        │   B slice ?  │
              └──────────────┘        └──────────────┘
                              YES                      NO
              Merge                   INTER
              From merge_idx:
              -predType(P/B)
              -ref_idx(es)
              -MV(s)
```

Merge_idx — Merge
From merge_idx:
-predType(P/B)
-ref_idx(es)
-MV(s)

Decode
• 2 ref_idx
• 2 MVD
• 2 MV idx

AMVP

Decode
• 1 ref_idx
• 1 MVD
• 1 MV idx

INTER-B

INTER-P

**FIG. 9**

Initial candidates derivation

Up to one spatial candidate derivation from above blocks

Up to one spatial candidate derivation from left blocks

Redundancy check for spatial candidates

Temporal candidate derivation

Additional candidates derivation

Insertion of zero motion candidates

Final AMVP candidates list

**FIG. 10**

FIG. 11

FIG. 12

EP 4 730 803 A1

```
┌─────────────────────────────────────┐
│   Spatial candidate positions (5)    │
└─────────────────────────────────────┘
                 │
                 ▼
┌─────────────────────────────────────┐   ┌─────────────────────────────────────┐
│       Select max. 4 candidates       │   │   Temporal candidate positions (2)   │
│     (remove duplicated candidates)    │   │                                     │
└─────────────────────────────────────┘   └─────────────────────────────────────┘
                 │                                          │
                 ▼                                          ▼
┌─────────────────────────────────────┐   ┌─────────────────────────────────────┐
│     Partition redundancy removal     │   │       Select max. 1 candidates       │
│(e.g., avoid virtual 2Nx2N partition by│   │                                     │
│        merging 2 2NxN)               │   │                                     │
└─────────────────────────────────────┘   └─────────────────────────────────────┘
                 │                                          │
                 ▼                                          ▼
┌─────────────────────────────────────────────────────────────────────────────┐
│           Add combined bi-predictive candidates for B slices                  │
└─────────────────────────────────────────────────────────────────────────────┘
                                         │
                                         ▼
┌─────────────────────────────────────────────────────────────────────────────┐
│                        Add zero merge candidates                              │
└─────────────────────────────────────────────────────────────────────────────┘
                                         │
                                         ▼
┌─────────────────────────────────────────────────────────────────────────────┐
│  Final merge candidates (maximum number is equal to MaxNumMergeCand)           │
└─────────────────────────────────────────────────────────────────────────────┘
```

**FIG. 13**

FIG. 14

1) Left A1 | 2) Above B1 | 3) Above Right B0 | 4) Below Left A0 | 5) Above Left B2

Check avalability and select motion vector predictor position

Generation of a list of up to 4 spatial candidates

New pruning process with partial comparison

Nb_Cand < Max_Cand ?
No / Yes

Generate combined predictors Update Nb_cand

Nb_Cand < Max_Cand ?
No / Yes

Add zero candidates until Nb_Cand == Max_Cand

Final list of MERGE candidates

H or Center

Check avalability and select motion vector predictor position

Scaling

Cand 5

(e.g., Max_cand =5)

FIG. 15

EP 4 730 803 A1

FIG. 16A

EP 4 730 803 A1

**FIG. 16B**

FIG. 17

**FIG. 18**

FIG. 20

FIG. 19

**FIG. 22**

**FIG. 21**

(a)     Spatial neighboring blocks used by ATVMP

**FIG. 23**

Motion shift
is set to
A1's
motion

Collocated Picture

Current Picture

⟶  MV_L0 from collocated block

⟶  MV_L1 from collocated block

------⟶  MV_L0 for current block (after scaling)

------⟶  MV_L1 for current block (after scaling)

(b)     Deriving sub-CU motion field by applying a motion shift from spatial neighbor and scaling the motion information from the corresponding collocated sub-CUs

EP 4 730 803 A1

FIG. 24

**FIG. 25**

FIG. 26

**FIG. 27**

Reference samples of the template in reference list 0 (RT0)

Reference samples of the template in reference list 1 (RT1)

Template (T)

Reference Block

Current Block

Reference Block

MV of the merge candidate in reference list 0

MV of the merge candidate in reference list 1

Reference picture in reference list 0

Current picture

Reference picture in reference list 1

Constitute the above reference template

D REF

C REF

B REF

A REF

D

C

B

A

Collocated Block

E

F

G

E REF

F REF

G REF

Reference picture

Constitute the left reference template

Template (T)

D

C

B

A

Current Block

E

F

G

Current picture

**FIG. 28**

FIG. 29

FIG. 30

amvpMerge

In slice level, Construct reference picture pair for amvpMerge
(non true bi reference pictures can be pair for low delay picture)

Generate amvp candidate list

Generate merge candidate list

Low delay

Bilateral matching based merge candidate list reordering

true-bi & equal distance — true-bi

Bilateral matching based refinement

Template matching based refinement

end

**FIG. 31**

obtaining, for a current block coded in inter mode, a current template area in a set of a plurality of template areas  ⌇3200

obtaining a current motion vector predictor, for the current block, based on the current template area  ⌇3202

decoding the current block based on the current motion vector predictor  ⌇3204

# FIG. 32

obtaining, for a current block coded in inter mode, a current template area in a set of a plurality of template areas — 3300

obtaining a current motion vector predictor, for the current block, based on the current template area — 3302

encoding the current block based on the current motion vector predictor — 3304

# FIG. 33

**FIG. 35**

top

left

Extended top

Extended left

**FIG. 34**

CU in AMVP mode template area among { top-left, top-only, left-only }

3400 — Get MV prediction candidates

3402 — Get template area for current CU

3404 — Reorder MVP candidate list based on TM cost computed on considered template area

3406 — Get MVP with minimum TM cost

3408 — Refine selected MVP by minimizing TM-cost computed on selected template area

END

FIG. 37

3700 — Construct merge candidate list

3702 — TM-cost based reordering of merge candidates by computing TM cost on selected template area

3704 — Get Merge candidate in reordered list based on current CU merge index

3706 — Refine selected MVP by minimizing TM-cost computed on selected template area

END

CU in TM-merge mode template area among { top-left, top-only, left-only }

FIG. 36

3600 — Construct merge candidate list

3602 — Get Merge candidate in reordered list based on current CU merge index

3604 — Refine selected MVP by minimizing TM-cost computed on selected template area

END

CU in TM-merge mode template area among { top-left, top-only, left-only }

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/206613 A1 (QUALCOMM INC [US]) 3 October 2024 (2024-10-03) <br><br> * paragraphs [0005] - [0006], [0011], [0111], [0128], [0134], [0142] - [0148], [0155], [0164] - [0166], [0180] * <br> * figures 5, 9 * <br> ----- | 1-5, 7-14, 16-18 | INV. <br> H04N19/52 <br> H04N19/105 <br> H04N19/109 <br> H04N19/176 |
| X | WO 2023/020389 A1 (MEDIATEK SINGAPORE PTE LTD [SG]; CHUBACH OLENA [US] ET AL.) 23 February 2023 (2023-02-23) <br> * page 3, line 8 - page 5, line 21 * <br> * page 6, line 27 - page 7, line 23 * <br> * page 12, line 26 - page 14, line 5 * <br> * figures 2, 6, 8 * <br> ----- | 1-7, 10-16 | |
| | | | TECHNICAL FIELDS SEARCHED (IPC) <br><br> H04N |

The present search report has been drawn up for all claims

| Place of search | Date of completion of the search | Examiner |
|---|---|---|
| The Hague | 27 March 2025 | Mayer, Claudia |

EPO FORM 1503 03.82 (P04C01)

## ANNEX TO THE EUROPEAN SEARCH REPORT
## ON EUROPEAN PATENT APPLICATION NO.

EP 24 30 6728

This annex lists the patent family members relating to the patent documents cited in the above-mentioned European search report.
The members are as contained in the European Patent Office EDP file on
The European Patent Office is in no way liable for these particulars which are merely given for the purpose of information.

27-03-2025

| Patent document cited in search report | Publication date | Patent family member(s) | Publication date |
|---|---|---|---|
| WO 2024206613 A1 | 03-10-2024 | NONE | |
| WO 2023020389 A1 | 23-02-2023 | CN 117941355 A | 26-04-2024 |
| | | CN 118285103 A | 02-07-2024 |
| | | TW 202316859 A | 16-04-2023 |
| | | TW 202329692 A | 16-07-2023 |
| | | US 2024357083 A1 | 24-10-2024 |
| | | US 2024357084 A1 | 24-10-2024 |
| | | WO 2023020389 A1 | 23-02-2023 |
| | | WO 2023020390 A1 | 23-02-2023 |

EPO FORM P0459

For more details about this annex : see Official Journal of the European Patent Office, No. 12/82